# EUROPEAN PATENT APPLICATION

(11) **EP 4 821 956 A1**
(43) Date of publication of application: **14.10.2026**
(21) Application number: 24900645.3
(22) Date of filing: 04.12.2024
(51) Int. Cl.: C08F 2/16, C08F 14/26, C08L 27/18

(54) **FLUOROELASTOMER PRODUCTION METHOD, COMPOSITION, SOLID COMPOSITION, AND CROSSLINKED RUBBER ARTICLE**

(30) Priority: 06.12.2023 JP 2023205993; 09.10.2024 JP 2024177486
(71) Applicant: AGC Inc., Chiyoda-ku Tokyo 100-8405 (JP)
(72) Inventor: YANAGIYA, Aoi, Tokyo 100-8405 (JP); SHIBASAKI, Kosuke, Tokyo 100-8405 (JP); KAMIMORI, Koichiro, Tokyo 100-8405 (JP); YONEDA, Toshikazu, Tokyo 100-8405 (JP); YAMADA, Takeshi, Tokyo 100-8405 (JP); ISHITSUKA, Kei, Tokyo 100-8405 (JP); HARADA, Hirofumi, Tokyo 100-8405 (JP); TAGUCHI, Daisuke, Tokyo 100-8405 (JP)
(74) Representative: Müller-Boré & Partner Patentanwälte PartG mbB
(86) International application number: PCT/JP2024/042884
(87) International publication number: WO 2025/121351

(57) **Abstract**

There is provided a method of producing a fluorine-containing elastomer, the method comprising a step of polymerizing a monomer A containing a compound represented by CX¹X²=CX³-L-Z, a cyano group-containing monomer, and at least one selected from the group consisting of tetrafluoroethylene, a fluorine-containing vinyl ether, and a fluorine-containing allyl ether under a condition in which an emulsifier having a fluorine atom is substantially absent in an aqueous medium.

## Description

### Technical Field

The present invention relates to a method of producing a fluorine-containing elastomer, a composition, a solid composition, and a crosslinked rubber article.

### Background Art

A crosslinked product obtained by crosslinking a composition containing a fluorine-containing elastomer is used in various industrial fields because the crosslinked product is excellent in heat resistance, chemical resistance, flame retardancy, weather resistance, and the like.

For example, Patent Literature 1 describes a method of producing a fluorine-containing elastomer, the method of producing a fluorine-containing elastomer including polymerizing a fluorine-containing monomer in the presence of a non-fluorine-containing compound (1), a polymerization initiator, and an aqueous medium, in which a Mooney viscosity (ML1 + 10(100°C)) of the fluorine-containing elastomer is from 10 to 130, and an amount of the non-fluorine-containing compound (1) is from 3 to 5000 mass ppm relative to the aqueous medium.

### Citation List

### Patent Literature

Patent Literature 1: Japanese Patent No. 7041378

### SUMMARY OF INVENTION

### Technical Problem

In a crosslinked rubber article including a crosslinked product obtained by crosslinking a fluorine-containing elastomer, there has been a case where both a small compression set and surface smoothness are required to be achieved.

The present disclosure has been made in view of such circumstances, and a problem to be solved by one embodiment of the present disclosure is to provide a method of producing a fluorine-containing elastomer, a composition, and a solid composition, which enable obtaining a crosslinked rubber article having a small compression set and excellent surface smoothness.

Another problem to be solved by another embodiment of the present invention is to provide a crosslinked rubber article having a small compression set and excellent surface smoothness.

### Solution to Problem

The disclosure includes the following aspects.
<1> A method of producing a fluorine-containing elastomer, the method comprising a step of polymerizing a monomer containing a cyano group-containing monomer and at least one selected from the group consisting of tetrafluoroethylene, hexafluoropropylene, vinylidene fluoride, a fluorine-containing vinyl ether, and a fluorine-containing allyl ether,
   in the presence of a compound represented by the following Formula (X) and an aqueous medium, and under a condition in which an emulsifier having a fluorine atom is substantially absent.

      CX¹X²=CX³-L-Z ... (X)
   In Formula (X),
   each of X¹ and X² independently represents a hydrogen atom, a chlorine atom, or an alkyl group,
   X³ represents a hydrogen atom or an alkyl group,
   L represents a single bond or a divalent linking group, and
   Z represents an anionic group or a salt of an anionic group.
<2> The method of producing a fluorine-containing elastomer according to <1>, in which the cyano group-containing monomer is represented by the following Formula (Y).

   CR¹¹R¹²=CR¹³-R¹⁴-CN ... (Y)

   In Formula (Y), each of R¹¹, R¹², and R¹³ independently represents a hydrogen atom, a fluorine atom, or a methyl group, and R¹⁴ represents a divalent perfluorohydrocarbon group having 1 to 10 carbon atoms, or a group having an etheric oxygen atom at a terminal or between carbon-carbon bonds of a divalent perfluorohydrocarbon group having from 1 to 10 carbon atoms.
<3> The method of producing a fluorine-containing elastomer according to <1> or <2>, in which a content amount of the cyano group-containing monomer is from 0.5 to 20 mol% relative to a total amount of the monomers used for polymerization of the fluorine-containing elastomer.
<4> The method of producing a fluorine-containing elastomer according to any one of <1> to <3>, in which a content amount of the compound represented by the Formula (X) is from 0.1 to 5000 mass ppm relative to a total amount of the aqueous medium.
<5> A method of producing a fluorine-containing elastomer, the method comprising:
   a step of polymerizing a first monomer containing a cyano group-containing monomer and at least one selected from the group consisting of tetrafluoroethylene, hexafluoropropylene, vinylidene fluoride, a fluorine-containing vinyl ether, and a fluorine-containing allyl ether in a first aqueous medium under a condition in which an emulsifier having a fluorine atom is substantially absent, to produce a first fluorine-containing polymer and to obtain an aqueous dispersion containing the first fluorine-containing polymer; and
   a step of polymerizing a second monomer containing tetrafluoroethylene in the aqueous dispersion containing the first fluorine-containing polymer, to obtain a second fluorine-containing polymer, thereby obtaining a fluorine-containing elastomer containing the first fluorine-containing polymer and the second fluorine-containing polymer.
<6> The method of producing a fluorine-containing elastomer according to <5>, in which the cyano group-containing monomer is represented by the following Formula (Y).

   CR¹¹R¹²=CR¹³-R¹⁴-CN ... (Y)

   In Formula (Y), each of R¹¹, R¹², and R¹³ independently represents a hydrogen atom, a fluorine atom, or a methyl group, and R¹⁴ represents a divalent perfluorohydrocarbon group having 1 to 10 carbon atoms, or a group having an etheric oxygen atom at a terminal or between carbon-carbon bonds of a divalent perfluorohydrocarbon group having 1 to 10 carbon atoms.
<7> The method of producing a fluorine-containing elastomer according to <5> or <6>, in which the first aqueous medium further contains a compound represented by the following Formula (X).

   CX¹X²=CX³-L-Z ... (X)

   In Formula (X),
   each of X¹ and X² independently represents a hydrogen atom, a chlorine atom, or an alkyl group,
   X³ represents a hydrogen atom or an alkyl group,
   L represents a single bond or a divalent linking group, and
   Z represents an anionic group or a salt of an anionic group.
<8> The method of producing a fluorine-containing elastomer according to <7>, in which a content amount of the compound represented by Formula (X) above is from 0.1 to 5000 mass ppm relative to a total amount of the first aqueous medium.
<9> The method of producing a fluorine-containing elastomer according to any one of <5> to <8>, in which a content amount of the cyano group-containing monomer is from 0.5 to 20 mol% relative to a total amount of the first monomers.
<10> A composition including:
   a compound represented by the following Formula (X);
   a first fluorine-containing polymer containing a structural unit based on a cyano group-containing monomer and a structural unit based on at least one selected from the group consisting of tetrafluoroethylene, hexafluoropropylene, vinylidene fluoride, a fluorine-containing vinyl ether, and a fluorine-containing allyl ether; and
   a second fluorine-containing polymer containing a structural unit based on tetrafluoroethylene, in which
   the composition substantially does not contain an emulsifier having a fluorine atom.

      CX¹X²=CX³-L-Z ... (X)
   In Formula (X),
   each of X¹ and X² independently represents a hydrogen atom, a chlorine atom, or an alkyl group,
   X³ represents a hydrogen atom or an alkyl group,
   L represents a single bond or a divalent linking group, and
   Z represents an anionic group or a salt of an anionic group.
<11> The composition according to <10>, in which a content amount of metal is 50 mass ppm or less relative to a total solid content amount of the composition.
<12> The composition according to <10> or <11>, in which a content amount of a structural unit based on the cyano group-containing monomer is from 0.1 to 10 mol% relative to a total amount of the first fluorine-containing polymer and the second fluorine-containing polymer.
<13> A solid composition containing a fluorine-containing elastomer containing a structural unit based on a cyano group-containing monomer, a structural unit based on tetrafluoroethylene, and a structural unit based on at least one selected from the group consisting of a fluorine-containing vinyl ether and a fluorine-containing allyl ether, in which
   when heated in a nitrogen atmosphere under the following Condition 1, a weight reduction rate after a lapse of 1000 minutes from a start of temperature increase is 2.0% or less, and
   the solid composition substantially does not contain an emulsifier having a fluorine atom.
   (Condition 1)
   The temperature is raised from 40°C to 90°C at a heating rate of 20°C/min, held at 90°C for 120 minutes, raised from 90°C to 200°C at a heating rate of 20°C/min, held at 200°C for 240 minutes, raised from 200°C to 305°C at a heating rate of 20°C/min, and held at 305°C for 720 minutes.
<14> The solid composition according to <13>, in which a content amount of metal is 50 mass ppm or less relative to a total amount of the solid composition.
<15> The solid composition according to <13> or <14>, in which a content amount of a structural unit based on the cyano group-containing monomer is from 0.1 to 10 mol% relative to a total amount of the fluorine-containing elastomer.
<16> The solid composition according to any one of <13> to <15>, in which a storage elastic modulus is from 200 to 600 kPa.
<17> A crosslinked rubber article containing a crosslinked product obtained by crosslinking a fluorine-containing elastomer containing a structural unit based on a cyano group-containing monomer, a structural unit based on tetrafluoroethylene, and a structural unit based on at least one selected from the group consisting of a fluorine-containing vinyl ether and a fluorine-containing allyl ether, in which
   a weight reduction rate after immersion in 1,1,1,2,2,3,3,4,4,5,5,6,6-tridecafluorohexane for 12 hours and drying is 0.5% or less, and
   the crosslinked rubber article substantially does not contain an emulsifier having a fluorine atom.
<18> The crosslinked rubber article according to <17>, in which the crosslinked product has a heterocyclic structure.
<19> The crosslinked rubber article according to <17>, in which the crosslinked product has at least one structure selected from the group consisting of an oxazole structure and a triazine structure.

### Advantageous Effects of Invention

According to one embodiment of the present invention, there are provided a method of producing a fluorine-containing elastomer, a composition, and a solid composition, which enable obtaining a crosslinked rubber article having a small compression set and excellent surface smoothness.

Another problem to be solved by another embodiment of the present invention is to provide a crosslinked rubber article having a small compression set and excellent surface smoothness.

### DESCRIPTION OF EMBODIMENTS

In the present disclosure, a numerical range indicated using "to" includes numerical values described before and after "to" as a minimum value and a maximum value, respectively.

In the numerical ranges described in stages in the present disclosure, the upper limit value or the lower limit value described in one numerical range may be replaced with the upper limit value or the lower limit value of the numerical range described in another stage. In addition, in the numerical ranges described in the present disclosure, the upper limit value or the lower limit value of the numerical range may be replaced with a value shown in Examples.

In the present disclosure, each component may contain a plurality of corresponding substances. When a plurality of types of substances corresponding to each component are present in the composition, the content rate or content amount of each component means the total content rate or the total content amount of the plurality of types of substances present in the composition unless otherwise specified.

In the present disclosure, a plurality of types of particles corresponding to each component may be contained. When there are a plurality of types of particles corresponding to each component in the composition, the particle diameter of each component means a value for a mixture of the plurality of types of particles present in the composition unless otherwise specified.

In the present disclosure, an "elastomer" is an elastic fluorine-containing polymer having no melting point and having a storage elastic modulus G' of 80 kPa or more at 100°C and a frequency of 50 cpm measured in accordance with ASTM D6204, and is distinguished from a fluororesin.

### [Method for Producing Fluorine-Containing Elastomer]

A first aspect of the method of producing a fluorine-containing elastomer of the present disclosure (hereinafter also referred to as "the present production method A") includes a step of polymerizing a monomer containing a cyano group-containing monomer and at least one selected from the group consisting of tetrafluoroethylene (hereinafter also referred to as "TFE"), hexafluoropropylene (hereinafter also referred to as "HFP"), vinylidene fluoride (hereinafter also referred to as "VdF"), a fluorine-containing vinyl ether, and a fluorine-containing allyl ether, in the presence of a compound represented by the following Formula (X) (hereinafter also referred to as "a compound (X)") and an aqueous medium, and under a condition in which an emulsifier having a fluorine atom is substantially absent.

CX¹X²=CX³-L-Z ... (X)

In Formula (X),
each of X¹ and X² independently represents a hydrogen atom, a chlorine atom, or an alkyl group,
X³ represents a hydrogen atom or an alkyl group,
L represents a single bond or a divalent linking group, and
Z represents an anionic group or a salt of an anionic group.

According to the present production method A, by polymerizing a monomer containing a cyano group-containing monomer and at least one selected from the group consisting of TFE, HFP, VdF, a fluorine-containing vinyl ether and a fluorine-containing allyl ether in the presence of the compound (X) and an aqueous medium, a fluorine-containing elastomer capable of obtaining a crosslinked rubber article having a small compression set and excellent surface smoothness is obtained.

In contrast, Patent Literature 1 does not contain any description focusing on a cyano group-containing monomer.

### <Emulsifier>

The present production method A is carried out under a condition in which an emulsifier having a fluorine atom is substantially absent. The phrase "an emulsifier having a fluorine atom is substantially absent" means that the content amount of the emulsifier having a fluorine atom is 10 mass ppm or less, preferably 150 mass ppb or less, and more preferably 50 mass ppb or less, relative to the total amount of the aqueous medium, in the production of the fluorine-containing elastomer. The lower limit value of the content amount of the emulsifier having a fluorine atom is 0 mass ppb.

Preferably, the present production method A is carried out under the condition in which an emulsifier having a fluorine atom and an emulsifier not having a fluorine atom are substantially absent, from the viewpoint of preventing a decrease in the molecular weight of the produced fluorine-containing elastomer.

The phrase that "an emulsifier having a fluorine atom and an emulsifier not having a fluorine atom (hereinafter also collectively referred to as "emulsifier") are substantially absent" means that the content amount of the emulsifier is 10 mass ppm or less, preferably 150 mass ppb or less, and more preferably 50 mass ppb or less relative to the total amount of the aqueous medium, in the production of the fluorine-containing elastomer. The lower limit of the content amount of the emulsifier is 0 mass ppb.

The content amount of various emulsifiers can be measured using a liquid chromatograph mass spectrometer. Specifically, the details are as described in the Examples.

Examples of the emulsifier include water-soluble emulsifiers. The water-soluble emulsifier means an emulsifier having a solubility of 100 mg or more in 1000 g of water at 25°C, and the water-insoluble emulsifier means an emulsifier other than the water-soluble emulsifier. The water-soluble emulsifier may be either ionic or nonionic.

Examples of the emulsifier include those having no carbon-carbon double bond.

None of the components contained in a monomer A used in the polymerization of the present production method A corresponds to an emulsifier.

Examples of the emulsifier having a fluorine atom include anionic fluorine-containing emulsifiers.

Examples of the anionic fluorine-containing emulsifier include a fluorine-containing emulsifier in which the total number of carbon atoms in a moiety excluding an anionic group is 20 or less, and a fluorine-containing emulsifier in which the anionic portion has a molecular weight of 800 or less. The "anionic portion" means a portion excluding cations of the fluorine-containing emulsifier.

The emulsifier not having a fluorine atom is an emulsifier not having a fluorine atom and having a hydrocarbon group such as an alkyl group as a hydrophobic moiety. It is also possible to substitute the hydrogen atom of the hydrocarbon group of the emulsifier not having a fluorine atom with a halogen atom other than the fluorine atom.

Examples of the emulsifier not having a fluorine atom include anionic hydrocarbon emulsifiers and nonionic hydrocarbon emulsifiers.

The anionic hydrocarbon emulsifier means an emulsifier having a negatively charged hydrophilic moiety such as a carboxylic acid group, a sulfonic acid group, a sulfuric acid group, a phosphonic acid group, and a phosphoric acid group, and a hydrocarbon group such as an alkyl group as a hydrophobic moiety.

Specific examples of the anionic hydrocarbon emulsifier include sodium dodecyl sulfate; a highly branched C10 tertiary carboxylic acid supplied as Versatic (registered trademark) 10 by Resolution Performance Products; a linear alkyl polyether sulfonic acid sodium salt supplied as the Avanel (registered trademark) S series by BASF; and a sulfosuccinate emulsifier Lankropol (registered trademark) K8300 available from AkzoNobel Surface Chemistry LLC.

The nonionic hydrocarbon emulsifier is an emulsifier having a hydrocarbon group such as an alkyl group as a hydrophobic moiety, which exhibits surfactant activity without dissociating into ions in water.

Examples of the hydrophilic moiety of the nonionic hydrocarbon emulsifier include water-soluble functional groups such as polyethylene oxide chains obtained from polymerization of ethylene oxide. Examples of the nonionic hydrocarbon emulsifier include a polyalkylene oxide block copolymer, for example, a block copolymer having polyethylene oxide and polypropylene oxide.

Examples of another nonionic hydrocarbon emulsifier include emulsifiers described in paragraphs [0043] to [0052] of Japanese Patent Publication No. 2016-537499.

The emulsifier having a fluorine atom and the emulsifier not having a fluorine atom may contain a silicon atom. Examples of the emulsifier having a silicon atom include siloxane emulsifiers. The siloxane emulsifier is a hydrocarbon-containing emulsifier having a siloxane skeleton.

Examples of the siloxane emulsifier include emulsifiers described in U.S. Patent No. 6,841,616 (Wille et al.) and 7,977,438 (Brothers et al.).

The emulsifier having a fluorine atom and the emulsifier not having a fluorine atom may be polymer emulsifiers. Examples of the polymer emulsifier include a polymer having a hydrophilic group in a side chain. Examples of such a polymer emulsifier include a polymer containing a unit based on a compound having a site capable of reacting by polymerization and a hydrophilic group. In addition, a polymer obtained by subjecting a polymer containing a unit based on a compound having a group that can be a hydrophilic group to post-treatment such as hydrolysis even when the polymer does not have a hydrophilic group from the beginning can also be mentioned.

When the monomer A is polymerized under a condition in which an emulsifier not having a fluorine atom is present, from 0.1 to 15 parts by mass of an emulsifier not having a fluorine atom are usually used relative to 100 parts by mass of the aqueous medium.

### <Aqueous Medium>

The present production method A is carried out under a condition in which an aqueous medium is present.

Specific examples of the aqueous medium include water and a mixed solvent of water and a water-soluble organic solvent. Specific examples of the water-soluble organic solvent include tert-butanol, propylene glycol, dipropylene glycol, dipropylene glycol monomethyl ether, and tripropylene glycol.

### <Compound (X)>

The present production method A is carried out under a condition in which the compound (X) is present.

CX¹X²=CX³-L-Z ... (X)

In Formula (X),
each of X¹ and X² independently represents a hydrogen atom, a chlorine atom, or an alkyl group,
X³ represents a hydrogen atom or an alkyl group,
L represents a single bond or a divalent linking group, and
Z represents an anionic group or a salt of an anionic group.

In Formula (X), each of X¹ and X² independently represents a hydrogen atom or an alkyl group.

The alkyl group may be linear, branched, or cyclic.

The number of carbon atoms in the alkyl group is preferably from 1 to 10, more preferably 1 to 3, and still more preferably 1.

Each of X¹ and X² is preferably a hydrogen atom from the viewpoint of increasing the number of particles of the first polymer.

In Formula (X), X³ represents a hydrogen atom, a fluorine atom, or an alkyl group.

Specific examples and preferable embodiments of the alkyl group are the same as specific examples and preferable embodiments of the alkyl group in X¹ and X².

X³ is preferably a fluorine atom or a hydrogen atom, and more preferably a hydrogen atom, from the viewpoint of increasing the number of particles of the first polymer.

In Formula (X), L represents a single bond or a divalent linking group.

Examples of the divalent linking group include an alkylene group, a carbonyl group, an ether bond, a thioether bond, a sulfonyl group, -NH-, -SiH₂-, a phenylene group, -CF₂-, and a group obtained by combining two or more thereof. Examples of the group obtained by combining two or more of them include an ester bond, a thioester bond, an amide bond, a sulfonamide bond, a combination of an alkylene group and an ether bond, a combination of an alkylene group and an ester bond, and a combination of an alkylene group and an amide bond.

The alkylene group may be linear, branched, or cyclic, and is preferably linear or branched, and more preferably branched. The number of carbon atoms in the alkylene group is, for example, from 1 to 6, and preferably from 1 to 4.

Specific examples of L include a single bond, an alkylene group, an ether bond, an ester bond, *^{C}-CO-NH-R-*^{Z}, and a single bond, an alkylene group having 1 to 6 carbon atoms, and *^{C}-CO-NH-R-*^{Z} are preferable, and particularly, a single bond, an alkylene group having 1 to 2 carbon atoms, and *^{C}-CO-NH-R-*^{Z} are more preferable. Here, *^{C} is a binding site with a carbon atom in Formula (X), *^{Z} is a binding site with Z in Formula (X), and R is an alkylene group having 1 to 6 carbon atoms. The alkylene group represented by R may be a linear alkylene group or a branched alkylene group.

In Formula (X), Z represents an anionic group or a salt of an anionic group.

Examples of the anionic group include -SO₃H, -OSO₃H, -P(=O)(OH)₂, -OP(=O)(OH)₂, and -COOH.

Examples of the salt of the anionic group include a group in which the hydrogen ion of the anionic group is replaced with a cation other than the hydrogen ion.

Examples of the cation include a metal ion, an ammonium ion, an imidazolium cation, a pyrrolidinium cation, a pyridinium cation, a piperidinium cation, and a phosphonium cation.

Examples of the metal ion include an alkali metal ion such as a sodium ion, a potassium ion, or a lithium ion; and an alkaline earth metal ion such as a calcium ion or a magnesium ion.

Z preferably represents -SO₃M, -OSO₃M, -P(=O)(OM)₂, -OP(=O)(OM)₂, or -COOM.

Z preferably represents -SO₃M and -COOM, more preferably -SO₃Na and -COONa, and still more preferably -SO₃Na from the viewpoint of productivity.

M represents a hydrogen atom, a metal atom, N(R^{M1})₄, or P(R^{M2})₄, and each of R^{M1} and RM2 independently represents a hydrogen atom or a substituent.

The metal atom represented by M is preferably a Group 1 metal atom, and more preferably Li, Na, or K.

The substituent represented by R^{M1} and R^{M2} is preferably a monovalent organic group, more preferably a monovalent hydrocarbon group, and still more preferably an alkyl group or an aromatic hydrocarbon group.

The number of carbon atoms in the substituent is preferably 1 to 10.

The alkyl group may be linear, branched, or cyclic.

The aromatic hydrocarbon group may be either a monocyclic ring or a polycyclic ring. The aromatic hydrocarbon group is preferably a phenyl group.

Examples of the molecular weight of the compound (X) include from 70 to 500, and from the viewpoint of dispersion stability, the molecular weight is preferably from 70 to 450 and more preferably from 100 to 300.

Specific examples of the compound (X) include vinylsulfonic acid, vinylphosphonic acid, (meth)acrylic acid, allylsulfonic acid, allylphosphonic acid, butenoic acid, crotonic acid, vinyl acetate, 2-sulfoethyl methacrylic acid, 4-vinylbenzenesulfonic acid, 2-acrylamido-2-methyl-1-propanesulfonic acid, N-tigloylglycine, 6-acrylamidohexanoic acid, 1,1-difluoro-2-methyl-2-[(1-oxo-2-propen-1-yl)amino]-1-propanesulfonic acid, 3-methyl-3-[(2-methyl-1-oxo-2-propen-1-yl)amino]-2-butanesulfonic acid, 2-methacrylamido-2-methylpropanesulfonic acid, 2,3-dimethyl-3-[(1-oxo-2-propen-1-yl)amino]-2-butanesulfonic acid, and salts thereof.

Examples of the metal salt include a salt of a metal atom represented by M.

As the compound (X), a vinyl compound having a sulfonic acid group, a phosphonic acid group, or a carboxy group; an allyl compound having a sulfonic acid group, a phosphonic acid group, or a carboxy group; (meth)acrylic acid; a (meth)acrylamide having a sulfonic acid group, a phosphonic acid group, or a carboxy group; and metal salts thereof are preferable, and vinylsulfonic acid, sodium vinylsulfonate, allylsulfonic acid, sodium allylsulfonate, 2-acrylamido-2-methyl-1-propanesulfonic acid, sodium 2-acrylamido-2-methyl-1-propanesulfonate, 2-methacrylamido-2-methyl-1-propanesulfonic acid, or sodium 2-methacrylamido-2-methyl-1-propanesulfonate is preferable. The above "(meth)acrylic acid" is a concept encompassing both acrylic acid and methacrylic acid, and the above "(meth)acrylamide" is a concept encompassing both acrylamide and methacrylamide.

The content amount of the compound (X) is preferably from 0.1 to 5000 mass ppm, more preferably from 0.2 to 1000 mass ppm, still more preferably from 0.3 to 500 mass ppm, and particularly preferably from 0.5 to 100 mass ppm, relative to the total amount of the aqueous medium.

### <Monomer Used for Polymerization of Fluorine-Containing Elastomer>

In the present production method A, a monomer containing a cyano group-containing monomer and at least one selected from the group consisting of TFE, HFP, VdF, a fluorine-containing vinyl ether, and a fluorine-containing allyl ether is polymerized.

Hereinafter, the monomer used for polymerization of the fluorine-containing elastomer is also referred to as "monomer A".

The monomer A may contain other monomers other than the cyano group-containing monomer and at least one selected from the group consisting of TFE, HFP, VdF, a fluorine-containing vinyl ether, and a fluorine-containing allyl ether.

### (Cyano Group-Containing Monomer)

The monomer A contains a cyano group-containing monomer.

The cyano group-containing monomer is not particularly limited as long as the cyano group-containing monomer is a compound having a cyano group and having a polymerizable group.

The cyano group-containing monomer is preferably a monomer represented by the following Formula (Y) from the viewpoint of more excellent releasability and heat resistance of the crosslinked rubber article.

CR¹¹R¹²=CR¹³-R¹⁴-CN ... (Y)

In Formula (Y), each of R¹¹, R¹², and R¹³ independently represents a hydrogen atom, a fluorine atom, or a methyl group, and R¹⁴ represents a divalent perfluorohydrocarbon group having 1 to 10 carbon atoms, or a group having an etheric oxygen atom at a terminal or between carbon-carbon bonds of a divalent perfluorohydrocarbon group having 1 to 10 carbon atoms.

Preferably, R¹¹, R¹², and R¹³ are a fluorine atom or a hydrogen atom from the viewpoint of excellent polymerization reactivity, more preferably, all of R¹¹, R¹², and R¹³ are fluorine atoms or all of R¹¹, R¹², and R¹³ are hydrogen atoms, and particularly preferably, all of R¹¹, R¹², and R¹³ are fluorine atoms from the viewpoint of more excellent releasability and heat resistance of the crosslinked rubber article.

R¹⁴ may be linear, branched, or cyclic, and is preferably linear or branched. The number of carbon atoms of R¹⁴ is preferably from 2 to 8, more preferably from 3 to 7, still more preferably from 3 to 6, and particularly preferably from 3 to 5.

R¹⁴ may or may not have an etheric oxygen atom, but preferably has an etheric oxygen atom from the viewpoint of more excellent rubber physical properties.

The number of etheric oxygen atoms in R¹⁴ is preferably from 1 to 3, and particularly preferably from 1 or 2.

Specific examples of the monomer represented by Formula (Y) include CF₂=CFOCF₂CF(CF₃)OCF₂CF₂CN (hereinafter also referred to as "8CNVE"), CF₂=CFO(CF₂)₅CN (hereinafter also referred to as "MV5CN"), CF₂=CFOCF₂CF₂CF₂OCF(CF₃)CN, and CF₂=CFO(CF₂)₃CN, and 8CNVE or MV5CN is preferable from the viewpoint of more excellent releasability and heat resistance of the crosslinked rubber article.

From the viewpoint of more excellent mold releasability and physical properties of the crosslinked rubber article, the content amount of the cyano group-containing monomer is preferably from 0.5 to 20 mol%, more preferably from 0.5 to 15 mol%, still more preferably from 0.5 to 10 mol%, and particularly preferably from 0.5 to 5 mol%, relative to the total amount of the monomers A.

### (TFE, HFP, VdF, Fluorine-Containing Vinyl Ether, and Fluorine-Containing Allyl Ether)

The monomer A contains at least one selected from the group consisting of TFE, HFP, VdF, a fluorine-containing vinyl ether, and a fluorine-containing allyl ether.

The fluorine-containing vinyl ether is preferably a compound represented by the following Formula (1) from the viewpoint of excellent polymerization reactivity.

CX¹¹X¹²=CX¹³-O-(CX¹⁴X¹⁵)ₘ₁-L¹-(CX¹⁶X¹⁷)ₙ₁-A¹ ... (1)

In Formula (1), each of X¹¹, X¹², X¹³, X¹⁴, X¹⁵, X¹⁶, and X¹⁷ independently represents a hydrogen atom, a fluorine atom, or a fluoroalkyl group, at least one of X¹¹ to X¹⁷ represents a fluorine atom or a fluoroalkyl group,
m¹ represents an integer of from 1 to 10,
n¹ represents an integer of from 0 to 10,
L¹ represents a single bond or a divalent linking group, and
A¹ represents an ionic group, a salt of the ionic group, a hydrogen atom, or a fluorine atom.

In addition, in the case of a compound having an anionic group or a salt of an anionic group and corresponding to both of Formula (X) and Formula (1), when the compound has a vinyl ether structure, the compound belongs to Formula (1).
X¹¹, X¹², X¹³, X¹⁴, X¹⁵, X¹⁶, and X¹⁷ are preferably fluorine atoms.
m¹ is preferably from 1 to 6, and more preferably from 1 to 3.
n¹ is preferably 0.

The divalent linking group represented by L¹ is preferably an alkylene group, - CH=CH-, -C≡C-, -O-, -S-, -CO-, -COO-, -OCO-, -CONR³¹-, -NR³²CO-, or a combination thereof.

Each of R³¹ and R³² independently represents a hydrogen atom or an alkyl group.

L¹ is preferably a single bond.

The ionic group represented by A¹ may be an anionic group or a cationic group.

Examples of the anionic group include the same anionic groups as those contained in the above Formula (X).

Examples of the cationic group include an ammonium group, a pyridinium group, a pyrrolidinium group, and an amino group.

A¹ is preferably a hydrogen atom or a fluorine atom.

Among them, the fluorine-containing vinyl ether is preferably a compound represented by the following Formula (1A).

CF₂=CF-O-R^{f1} ... (1A)

In Formula (1A), R^{f1} represents a fluoroalkyl group having from 1 to 10 carbon atoms. The number of carbon atoms in R^{f1} is preferably from 1 to 8, more preferably from 1 to 6, still more preferably from 1 to 5, and particularly preferably from 1 to 3 from the viewpoint of more excellent polymerization reactivity.

The fluoroalkyl group may be linear or branched.

The fluoroalkyl group is preferably a perfluoroalkyl group.

The fluorine-containing vinyl ether is preferably perfluoroalkyl vinyl ether (hereinafter also referred to as "PAVE").

Specific examples of the PAVE include perfluoro(methyl vinyl ether) (hereinafter also referred to as "PMVE"), perfluoro(ethyl vinyl ether) (hereinafter also referred to as "PEVE"), and perfluoro(propyl vinyl ether) (hereinafter also referred to as "PPVE"). Among them, from the viewpoint of excellent polymerization reactivity, PAVE is preferably PMVE or PPVE, and more preferably PMVE.

The fluorine-containing allyl ether is preferably a compound represented by the following Formula (2) from the viewpoint of excellent polymerization reactivity.

CX²¹X²²=CX²³(CX²⁴X²⁵)-O-(CX²⁶X²⁷)ₘ₂-L²-(CX²⁸X²⁹)ₙ₂-A² ... (2)

In Formula (2), each of X²¹, X²², X²³, X²⁴, X²⁵, X²⁶, X²⁷, X²⁸, and X²⁹ independently represents a hydrogen atom, a fluorine atom, or a fluoroalkyl group, at least one of X²¹ to X²⁹ represents a fluorine atom or a fluoroalkyl group,
m² represents an integer of 1 to 10,
n² represents an integer of 0 to 10,
L² represents a single bond or a divalent linking group, and
A² represents an ionic group, a salt of an ionic group, a hydrogen atom, or a fluorine atom.

In addition, in the case of a compound having an anionic group or a salt of an anionic group and corresponding to both of Formula (X) and Formula (2), when the compound has an allyl ether structure, the compound belongs to Formula (2).
X²¹, X²², X²³, X²⁴, X²⁵, X²⁶, X²⁷, X²⁸, and X²⁹ are preferably fluorine atoms.
m² is preferably 1 to 6, and more preferably 1 to 3.
n² is preferably 0.

The divalent linking group represented by L² is preferably an alkylene group, - CH=CH-, -C≡C-, -O-, -S-, -CO-, -COO-, -OCO-, -CONR³¹-, -NR³²CO-, or a combination thereof.

Each of R³¹ and R³² independently represents a hydrogen atom or an alkyl group.

L² is preferably a single bond.

The ionic group represented by A² may be an anionic group or a cationic group.

Examples of the anionic group include the same anionic groups as those contained in the above Formula (X).

Examples of the cationic group include an ammonium group, a pyridinium group, a pyrrolidinium group, and an amino group.

A² is preferably a hydrogen atom or a fluorine atom.

Among them, the fluorine-containing allyl ether is preferably a compound represented by the following Formula (2A).

CF₂=CF-CF₂O-R^{f2} ... (2A)

In Formula (2A), R^{f2} represents a fluoroalkyl group having 1 to 10 carbon atoms. The number of carbon atoms in R^{f1} is preferably 1 to 8, more preferably 1 to 6, still more preferably 1 to 5, and particularly preferably 1 to 3 from the viewpoint of more excellent polymerization reactivity.

The fluoroalkyl group may be linear or branched.

The fluoroalkyl group is preferably a perfluoroalkyl group.

The fluorine-containing allyl ether is preferably perfluoroalkyl allyl ether (hereinafter also referred to as "PAAE").

Specific examples of PAAE include perfluoro(methyl allyl ether) (hereinafter also referred to as "PMAE"), perfluoro(ethyl allyl ether) (hereinafter also referred to as "PEAE"), and perfluoro(propyl allyl ether) (hereinafter also referred to as "PPAE"). Among them, from the viewpoint of excellent polymerization reactivity, PAAE is preferably PMAE or PPAE, and more preferably PMAE.

Among them, from the viewpoint of excellent polymerization reactivity, at least one selected from the group consisting of TFE, HFP, VdF, a fluorine-containing vinyl ether, and a fluorine-containing allyl ether preferably contains at least one selected from the group consisting of TFE, a fluorine-containing vinyl ether, and a fluorine-containing allyl ether.

That is, the monomer A preferably contains a cyano group-containing monomer and at least one selected from the group consisting of TFE, a fluorine-containing vinyl ether, and a fluorine-containing allyl ether.

Further, from the viewpoint of polymerization stability, the monomer A preferably contains a cyano group-containing monomer, TFE, and a fluorine-containing vinyl ether, and more preferably contains a cyano group-containing monomer, TFE, and PAVE.

When the monomer A contains TFE, the content amount of TFE is preferably from 10 to 90 mol%, more preferably from 30 to 80 mol%, still more preferably from 40 to 80 mol%, and particularly preferably from 40 to 70 mol%, relative to the total amount of the monomer A.

When the monomer A contains a fluorine-containing vinyl ether, the content amount of the fluorine-containing vinyl ether is preferably from 10 to 90 mol%, more preferably from 20 to 70 mol%, still more preferably from 20 to 60 mol%, and particularly preferably from 30 to 60 mol%, relative to the total amount of the monomer A.

When the monomer A contains a fluorine-containing allyl ether, the content amount of the fluorine-containing allyl ether is preferably from 10 to 90 mol%, more preferably from 20 to 70 mol%, still more preferably from 20 to 60 mol%, and particularly preferably from 30 to 60 mol%, relative to the total amount of the monomer A.

Examples of the other monomer include ethylene, propylene, vinyl chloride, vinylidene chloride, chlorotrifluoroethylene, fluoroalkylethylene, and a monomer having two or more polymerizable unsaturated bonds (hereinafter also referred to as "BO").

BO is a monomer having two or more polymerizable unsaturated bonds.

Specific examples of the polymerizable unsaturated bond include a carbon atom-carbon atom double bond (C=C) and a carbon atom-carbon atom triple bond (C≡C). The polymerizable unsaturated bond is more preferably a carbon atom-carbon atom double bond (C=C).

The number of polymerizable unsaturated bonds in BO is preferably from 2 to 6, more preferably 2 or 3, and still more preferably 2 from the viewpoint of more excellent polymerization reactivity.

BO preferably further has a fluorine atom from the viewpoint of further decreasing compression set of the crosslinked rubber article at a high temperature.

BO is preferably a monomer represented by Formula (B1) from the viewpoint of more excellent releasability of the crosslinked rubber article.

(CR²¹R²² = CR²³-)ₐ₁R²⁴ (B1)

Preferably, in Formula (B1),
each of R²¹, R²², and R²³ independently represents a hydrogen atom, a fluorine atom, a methyl group, or a trifluoromethyl group,
a1 represents an integer of 2 to 6,
R²⁴ represents an a1 valent perfluoro hydrocarbon group having 1 to 10 carbon atoms or a group having an etheric oxygen atom at a terminal of the perfluoro hydrocarbon group or between a carbon-carbon bond, and
the plurality of R²¹, the plurality of R²², and the plurality of R²³ are the same as or different from each other, and are the same as each other.
a1 is preferably 2 or 3, and more preferably 2.

From the viewpoint of more excellent polymerization reactivity of BO, R²¹, R²², and R²³ are preferably a fluorine atom or a hydrogen atom, all of R²¹, R²², and R²³ are more preferably fluorine atoms or all of them are hydrogen atoms, and from the viewpoint of more excellent releasability of the crosslinked rubber article, all of R²¹, R²², and R²³ are still more preferably fluorine atoms.

R²⁴ may be linear, branched, or cyclic, and is preferably linear or branched, and more preferably linear. The number of carbon atoms of R²⁴ is preferably from 2 to 8, more preferably from 3 to 7, still more preferably 3 to 6, and particularly preferably from 3 to 5.

R²⁴ may or may not have an etheric oxygen atom, but preferably has an etheric oxygen atom from the viewpoint of more excellent crosslinking reactivity and rubber physical properties.

The number of etheric oxygen atoms in R²⁴ is preferably 1 to 6, more preferably 1 to 3, and still more preferably 1 or 2. The etheric oxygen atom in R²⁴ is preferably present at the terminal of R²⁴.

Among the monomers represented by Formula (B1), specific examples of suitable monomers include a monomer represented by Formula (B2) and a monomer represented by Formula (B3).

(CF₂=CF-)₂R³¹ (B2)

In Formula (B2), R³¹ is a divalent perfluorohydrocarbon group having 1 to 10 carbon atoms, or a group having an etheric oxygen atom at a terminal of the perfluorohydrocarbon group or between carbon-carbon bonds.

(CH₂=CH-)₂R⁴¹ (B3)

In Formula (B3), R⁴¹ is a divalent perfluorohydrocarbon group having 1 to 10 carbon atoms, or a group having an etheric oxygen atom at a terminal of the perfluorohydrocarbon group or between carbon-carbon bonds.

Specific examples of the monomer represented by Formula (B2) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂, and CF₂=CFOCF₂CF₂O(CF₂O)₂CF₂CF₂OCF=CF₂.

Specific examples of more suitable monomers among the monomers represented by Formula (B2) include CF₂=CFO(CF₂)₃OCF=CF₂ (hereinafter also referred to as "C3DVE") and CF₂=CFO(CF₂)₄OCF=CF₂ (hereinafter also referred to as "C4DVE").

Specific examples of the monomer represented by Formula (B3) include CH₂=CH(CF₂)₂CH=CH₂, CH₂=CH(CF₂)₄CH=CH₂, and CH₂=CH(CF₂)₆CH=CH₂.

Specific examples of more suitable monomers among the monomers represented by Formula (B3) include CH₂=CH(CF₂)₆CH=CH₂ (hereinafter also referred to as "C6DV").

Among them, BO is preferably C3DVE or C4DVE.

In particular, the monomer A is preferably in the following aspects.
Aspect 1: The monomer A contains a cyano group-containing monomer, TFE, and PAVE.
Aspect 2: The monomer A contains a cyano group-containing monomer, TFE, and propylene.
Aspect 3: The monomer A contains a cyano group-containing monomer, HFP, and VdF.

In the case of Aspect 1, the amount of PAVE used is preferably from 20 to 95 mol%, more preferably from 25 to 80 mol%, and still more preferably from 30 to 60 mol%, relative to the total amount of TFE and PAVE used. When PMVE or PPVE is used as PAVE, the suitable amount of use is the same.

In the case of Aspect 1, the total amount of TFE and PAVE used is preferably from 80 to 99.9 mol%, more preferably from 90 to 99.5 mol%, and still more preferably from 95 to 99 mol%, relative to the amount of the monomer A used. When PMVE or PPVE is used as PAVE, the suitable amount of use is the same.

In the case of Aspect 2, the amount of propylene used is preferably from 5 to 90 mol%, more preferably from 8 to 70 mol%, still more preferably from 10 to 60 mol% relative to the total amount of TFE and propylene used.

In the case of Aspect 2, the total amount of TFE and propylene used is preferably from 60 to 99.9 mol%, more preferably from 70 to 99.5 mol%, still more preferably from 80 to 99 mol% relative to the amount of the monomer A used.

In the case of Aspect 3, the amount of VdF used is preferably from 5 to 90 mol%, more preferably from 8 to 80 mol%, and still more preferably from 10 to 70 mol%, relative to the total amount of HFP and VdF used.

In the case of Aspect 3, the total amount of HFP and VdF used is preferably from 40 to 100 mol%, more preferably from 50 to 100 mol%, and still more preferably from 60 to 100 mol%, relative to the amount of the monomer A used.

From the viewpoint of polymerization reactivity, the monomer A preferably does not substantially contain other monomers.

The phrase "substantially contains no other monomer" means that the content amount of the monomer is 10 mol% or less, and more preferably 0 mol%, relative to the total amount of the monomer A.

### <Polymerization Initiator>

In the present production method A, a polymerization initiator may be used.

The polymerization initiator used in the present production method A is preferably a water-soluble polymerization initiator, more preferably persulfates such as ammonium persulfate, sodium persulfate, and potassium persulfate, and organic polymerization initiators such as disuccinic acid peroxide and azobisisobutyramidine dihydrochloride, further preferably persulfates, and particularly preferably ammonium persulfate.

The amount of the polymerization initiator used is preferably from 0.01 to 5 parts by mass, more preferably from 0.01 to 3 parts by mass, and still more preferably from 0.01 to 2 parts by mass, relative to 100 parts by mass of the amount of the monomer A used.

When a polymerization initiator is used, the polymerization initiator may be added to the reactor in a batch manner or in a divided manner. In the case of addition in a divided manner, the addition may be performed in a stepwise manner or may be performed continuously.

The polymerization temperature is preferably from 10 to 95°C, and more preferably from 15 to 90°C.

The polymerization pressure is preferably from 0.5 to 4.0 MPaG, and more preferably from 0.6 to 3.5 MPaG.

The polymerization time is preferably from 90 to 1000 minutes, and more preferably from 90 to 800 minutes.

<Fluorine-Containing Elastomer>

In the present production method A, for example, an aqueous dispersion A containing particles of a fluorine-containing elastomer is obtained by carrying out a step of polymerizing the monomer A.

The fluorine-containing elastomer obtained by the present production method A does not correspond to an emulsifier having a fluorine atom.

The average particle diameter of the particles of the fluorine-containing elastomer is preferably 500 nm or less, more preferably 300 nm or less, still more preferably 200 nm or less, and particularly preferably 150 nm or less from the viewpoint of dispersion stability of the particles. The lower limit is preferably 2 nm or more, more preferably 5 nm or more, and still more preferably 10 nm or more.

As the average particle diameter of the particles of the fluorine-containing elastomer, a particle diameter or D50 (median diameter) calculated by analyzing an autocorrelation function acquired by a dynamic light scattering method by a monodisperse cumulant method can be adopted. The D50 is a particle diameter at a point where a cumulative volume becomes 50% on a cumulative curve, which is obtained by measuring a particle size distribution by a laser diffraction/scattering method and taking the total volume of a group of particles as 100%. As a specific method of measuring the average particle diameter, a method in Examples described later can be used.

The fluorine-containing elastomer preferably has no melting point.

A specific example of the method of measuring the melting point includes the measurement methods shown in the Examples section.

The fluorine-containing elastomer obtained by the present production method A is obtained by polymerizing the monomer A.

The compound (X) used in the present production method A may be copolymerized with the monomer A or may not be copolymerized with the monomer A. The fluorine-containing elastomer may contain a structural unit based on the compound (X) or may not contain a structural unit based on the compound (X).

The content amount of the structural unit based on the cyano group-containing monomer is preferably from 0.1 to 15 mol% and more preferably from 0.3 to 10 mol% relative to the total amount of the fluorine-containing elastomer.

The content amount of the structural unit based on at least one selected from the group consisting of TFE, HFP, VdF, a fluorine-containing vinyl ether, and a fluorine-containing allyl ether is preferably from 80 to 99.5 mol%, and more preferably from 90 to 99.7 mol%, relative to the total amount of the fluorine-containing elastomer.

The fluorine-containing elastomer is preferably in the following aspects.
Aspect 1: The fluorine-containing elastomer contains a structural unit based on a cyano group-containing monomer, a structural unit based on TFE, and a structural unit based on PAVE.
Aspect 2: The fluorine-containing elastomer contains a structural unit based on a cyano group-containing monomer, a structural unit based on TFE, and a structural unit based on propylene.
Aspect 3: The fluorine-containing elastomer contains a structural unit based on a cyano group-containing monomer, a structural unit based on HFP, and a structural unit based on VdF.

In the case of Aspect 1, the content amount of the structural unit based on TFE is preferably from 25 to 85 mol%, and more preferably from 35 to 75 mol%, relative to the total amount of the fluorine-containing elastomer.

In the case of Aspect 1, the content amount of the structural unit based on PAVE is preferably from 10 to 70 mol%, and more preferably from 20 to 60 mol% relative to the total amount of the fluorine-containing elastomer. The suitable content amount is the same when PMVE or PPVE is used as PAVE.

In the case of Aspect 2, the content amount of the structural unit based on TFE is preferably from 15 to 75 mol%, and more preferably from 25 to 65 mol%, relative to the total amount of the fluorine-containing elastomer.

In the case of Aspect 2, the content amount of the structural unit based on propylene is preferably from 20 to 80 mol%, and more preferably from 30 to 70 mol%, relative to the total amount of the fluorine-containing elastomer.

In the case of Aspect 3, the content amount of the structural unit based on HFP is preferably from 5 to 40 mol%, and more preferably from 10 to 30 mol%, relative to the total amount of the fluorine-containing elastomer.

In the case of Aspect 3, the content amount of the structural unit based on VdF is preferably from 5 to 85 mol%, and more preferably from 15 to 75 mol%, relative to the total amount of the fluorine-containing elastomer.

When the fluorine-containing elastomer obtained by the present production method A is heated in a nitrogen atmosphere under the following Condition 1, the weight reduction rate after a lapse of 1000 minutes from the start of temperature rise is preferably 2.0% or less.

### (Condition 1)

The temperature is raised from 40°C to 90°C at a heating rate of 20°C/min, held at 90°C for 120 minutes, raised from 90°C to 200°C at a heating rate of 20°C/min, held at 200°C for 240 minutes, raised from 200°C to 305°C at a heating rate of 20°C/min, and held at 305°C for 720 minutes.

Details of a method of calculating the weight reduction rate will be described later.

The weight reduction rate is preferably 1.5 mass% or less, and more preferably 1.3 mass% or less from the viewpoint of excellent compression set of the crosslinked rubber article. The lower limit is 0 mass%, and may be 0.1 mass% or more.

### <Other Steps>

The present production method A may include other steps other than the step of polymerizing the monomer A.

Examples of other steps include a step of aggregating and filtering the aqueous dispersion A to obtain fluorine-containing elastomer particles.

Examples of the aggregation method include, but are not limited to, freeze aggregation, acid aggregation, base aggregation, mechanical aggregation, and aggregation using a coagulant.

Specific examples of the mechanical aggregation include a method in which shearing force is applied by vigorously stirring the aqueous dispersion A to aggregate primary particles of the fluorine-containing elastomer. If necessary, the pH of the aqueous dispersion A may be adjusted, a coagulation aid such as an electrolyte and a water-soluble organic solvent may be added, and the aqueous dispersion A may be diluted with water in advance such that the concentration of the fluorine-containing elastomer in the aqueous dispersion A becomes from 8 to 20 mass%. Examples of the pH adjusting agent include sodium carbonate and sodium hydrogen carbonate. The mechanical aggregation can also be performed in the presence of one or more compounds selected from the group consisting of ammonia, an ammonium salt, and urea. Examples of the electrolyte include inorganic salts such as potassium nitrate, sodium nitrate, sodium carbonate, and sodium hydrogen carbonate. Examples of the water-soluble organic solvent include alcohols and acetone.

In the case of freeze aggregation, the aggregation temperature is preferably from -20 to 0°C. The aggregation time is preferably 1 hour or more, and more preferably 2 hours or more.

In the case of acid aggregation, a method of adding a solution containing an acid to the aqueous dispersion A is preferable. Examples of the acid to be added include hydrochloric acid, nitric acid, sulfuric acid, oxalic acid, and hydrofluoric acid, and nitric acid is preferable. The concentration of the acid in the solution containing the acid is preferably from 0.1 to 50 mass%, more preferably from 1 to 30 mass%, and still more preferably from 1 to 20 mass%.

As the base aggregation, a method of adding a solution containing a base to the aqueous dispersion A is preferable. Examples of the base to be added include sodium hydroxide, potassium hydroxide, ammonium carbonate, and the like, and sodium hydroxide is preferable. The concentration of the base in the solution containing the base is preferably from 0.1 to 50 mass%, more preferably from 1 to 30 mass%, and still more preferably from 1 to 10 mass%.

As the aggregation by the coagulant, a known coagulant can be used. Known coagulants include aluminum salts, calcium salts, magnesium salts, and ammonium salts. Specific examples thereof include ammonium carbonate, aluminum sulfate, alum represented by the general formula M'Al(SO₄)₂·12H₂O [where M' is a monovalent cation other than lithium], calcium nitrate, and magnesium sulfate. Alum is preferable, and potassium alum in which M is potassium is more preferable.

### [Method for Producing Fluorine-Containing Elastomer]

A second aspect of the method of producing a fluorine-containing elastomer of the present disclosure (hereinafter also referred to as "the present production method B") includes: a step of polymerizing a first monomer containing a cyano group-containing monomer and at least one selected from the group consisting of TFE, HFP, VdF, a fluorine-containing vinyl ether, and a fluorine-containing allyl ether, in a first aqueous medium under a condition in which an emulsifier having a fluorine atom is substantially absent, to produce a first fluorine-containing polymer and obtain an aqueous dispersion containing the first fluorine-containing polymer (hereinafter also referred to as a "first polymerization step"); and a step of polymerizing a second monomer containing TFE in the aqueous dispersion containing the first fluorine-containing polymer to obtain a second fluorine-containing polymer, thereby obtaining a fluorine-containing elastomer containing the first fluorine-containing polymer and the second fluorine-containing polymer (hereinafter also referred to as a "second polymerization step").

According to the present production method B, by including two steps of a step of polymerizing a first monomer containing a cyano group-containing monomer and a step of polymerizing a second monomer containing TFE, a fluorine-containing elastomer capable of obtaining a crosslinked rubber article having a small compression set and excellent surface smoothness is obtained.

In contrast, Patent Literature 1 does not contain any description focusing on the above two steps.

The present production method B may include other steps as necessary. Examples of the other steps include a purification step of subjecting a dispersion containing the first fluorine-containing polymer obtained through the first polymerization step to a purification treatment, and a concentration adjustment step of adjusting the solid content concentration of the dispersion containing the first fluorine-containing polymer.

In the present production method B, for example, after the first polymerization step, a purification step and a concentration adjustment step are continuously performed as necessary, and then a second polymerization step is performed. In the present production method B, for example, the first polymerization step, the purification step, the concentration adjustment step, and the second polymerization step are continuously performed.

The present production method B may include other steps as necessary. Examples of the other steps include a purification step of subjecting a dispersion containing the first fluorine-containing polymer obtained through the first polymerization step to a purification treatment, and a concentration adjustment step of adjusting the solid content concentration of the dispersion containing the first fluorine-containing polymer.

### [First Polymerization Step]

### <Emulsifier>

The first polymerization step of the present production method B is performed under a condition in which an emulsifier having a fluorine atom is substantially absent.

Preferably, the first polymerization step is performed under a condition in which an emulsifier is substantially absent from the viewpoint of preventing a decrease in the molecular weight of the fluorine-containing elastomer to be produced.

Examples of the emulsifier include the above-described emulsifiers.

The phrase "an emulsifier having a fluorine atom is substantially absent" means that the content amount of the emulsifier having a fluorine atom is 10 mass ppm or less, preferably 150 mass ppb or less, and more preferably 50 mass ppb or less, relative to the total amount of the first aqueous medium, in the first polymerization step. The lower limit is 0 mass ppb.

The phrase "an emulsifier is substantially absent" means that the content amount of the emulsifier is 10 mass ppm or less, preferably 150 mass ppb or less, and more preferably 50 mass ppb or less, relative to the total amount of the first aqueous medium, in the first polymerization step. The lower limit is 0 mass ppb.

### <First Aqueous Medium>

The first polymerization step of the present production method B is performed under a condition in which the first aqueous medium is present.

Specific examples of the first aqueous medium are the same as the specific examples of the aqueous medium.

Before the polymerization of the first monomer used for the polymerization of the first fluorine-containing polymer is started, the content amount of the aqueous medium is preferably from 20 to 80 vol% and more preferably from 40 to 70 vol% relative to the capacity of the reactor.

In the present disclosure, "before the polymerization of the first monomer used for the polymerization of the first fluorine-containing polymer is started" means immediately before the start of polymerization. Here, examples of the "polymerization initiation time point" include a time point when the first monomer is charged into the reactor after the inside of the reactor is brought to the polymerization temperature or higher, and a time point when the inside of the reactor is brought to the polymerization temperature or higher after the first monomer is charged into the reactor.

The first aqueous medium preferably further contains the compound (X). Preferable embodiments of the compound (X) are as described above.

When the compound (X) is contained in the first aqueous medium, dispersibility of the first fluorine-containing polymer to be produced is improved, polymerization easily proceeds, and a first fluorine-containing polymer having a high molecular weight and a large number of particles is obtained. Then, in the second polymerization step continuously performed after the first polymerization step, the dispersion stability of the second fluorine-containing polymer is improved because the number of particles of the first fluorine-containing polymer that is a polymerization field of the second monomer is large.

The amount of the compound (X) added is preferably from 0.1 to 5000 mass ppm, more preferably from 0.2 to 1000 mass ppm, still more preferably from 0.3 to 500 mass ppm, and particularly preferably from 0.5 to 100 mass ppm, relative to the total amount of the first aqueous medium.

### <First Monomer>

In the first polymerization step of the present production method B, a first monomer containing a cyano group-containing monomer and at least one selected from the group consisting of TFE, HFP, VdF, a fluorine-containing vinyl ether, and a fluorine-containing allyl ether is polymerized.

Preferable embodiments of the cyano group-containing monomer, the fluorine-containing vinyl ether, and the fluorine-containing allyl ether are as described above.

From the viewpoint of excellent physical properties of the crosslinked rubber article, the content amount of the cyano group-containing monomer is preferably from 0.5 to 20 mol%, more preferably from 0.2 to 20 mol%, still more preferably from 0.3 to 15 mol%, and particularly preferably 0.5 to 10 mol%, relative to the total amount of the first monomer.

From the viewpoint of polymerization reactivity, the first monomer preferably contains a cyano group-containing monomer, TFE, and a fluorine-containing vinyl ether, and more preferably contains a cyano group-containing monomer, TFE, and PAVE.

When the first monomer contains TFE, the content amount of TFE is preferably from 10 to 90 mol%, more preferably from 20 to 80 mol%, still more preferably from 30 to 70 mol%, and particularly preferably from 40 to 60 mol% relative to the total amount of the first monomer.

When the first monomer contains a fluorine-containing vinyl ether, the content amount of the fluorine-containing vinyl ether is preferably from 10 to 90 mol%, more preferably from 20 to 80 mol%, still more preferably from 30 to 70 mol%, and particularly preferably from 40 to 60 mol%, relative to the total amount of the first monomer.

When the first monomer contains a fluorine-containing allyl ether, the content amount of the fluorine-containing allyl ether is preferably from 10 to 90 mol%, more preferably from 20 to 80 mol%, still more preferably from 30 to 70 mol%, and particularly preferably from 40 to 60 mol% relative to the total amount of the first monomer.

The first monomer may contain other monomers other than the cyano group-containing monomer and at least one selected from the group consisting of TFE, HFP, VdF, a fluorine-containing vinyl ether, and a fluorine-containing allyl ether.

Examples of other monomers include ethylene, propylene, vinyl chloride, vinylidene chloride, chlorotrifluoroethylene, fluoroalkylethylene, and BO.

Preferable embodiments of BO that may be contained as other monomers are as described above.

From the viewpoint of polymerization reactivity, the first monomer preferably does not substantially contain other monomers.

The phrase "substantially contains no other monomer" means that the content amount of the monomer is 10 mol% or less, and more preferably 0 mol%, relative to the total amount of the first monomer.

### <Polymerization Initiator>

In the first polymerization step of the present production method B, a polymerization initiator may be used.

Preferable embodiments of the polymerization initiator are as described above.

The amount of the polymerization initiator used is preferably from 0.01 to 5 parts by mass, more preferably from 0.01 to 3 parts by mass, and still more preferably from 0.01 to 2 parts by mass, relative to 100 parts by mass of the amount of the first monomer used.

When a polymerization initiator is used, the polymerization initiator may be added to the reactor in a batch manner or in a divided manner. In the case of addition in a divided manner, the addition may be performed in a stepwise manner or may be performed continuously.

The polymerization temperature is preferably from 10 to 95°C, and more preferably from 15 to 90°C.

The polymerization pressure is preferably from 0.5 to 4.0 MPaG, and more preferably 0.6 to 3.5 MPaG.

The polymerization time is preferably from 10 to 300 minutes, and more preferably from 30 to 200 minutes.

In the first polymerization step of the present production method B, for example, by performing a step of polymerizing the first monomer, an aqueous dispersion B1 containing the first fluorine-containing polymer is obtained.

### <First Fluorine-Containing Polymer>

The first fluorine-containing polymer contains a structural unit based on the first monomer. That is, the first fluorine-containing polymer contains a structural unit based on a cyano group-containing monomer and a structural unit based on at least one selected from the group consisting of TFE, HFP, VdF, a fluorine-containing vinyl ether, and a fluorine-containing allyl ether.

The compound (X) contained in the first aqueous medium may be copolymerized with the first monomer or may not be copolymerized with the first monomer. The first fluorine-containing polymer may contain a structural unit based on the compound (X) or may not contain a structural unit based on the compound (X).

The first fluorine-containing polymer does not correspond to an emulsifier having a fluorine atom.

The content amount of the structural unit based on the cyano group-containing monomer is preferably from 0.1 to 10 mol% and more preferably from 0.5 to 5 mol% relative to the total amount of the first fluorine-containing polymer.

The content amount of the structural unit based on the fluorine-containing monomer is preferably from 90 to 99.9 mol% and more preferably from 95 to 99.5 mol% relative to the total amount of the first fluorine-containing polymer.

The first fluorine-containing polymer preferably contains a structural unit based on a cyano group-containing monomer, a structural unit based on TFE, and a structural unit based on a fluorine-containing vinyl ether, and more preferably contains a structural unit based on a cyano group-containing monomer, a structural unit based on TFE, and a structural unit based on PAVE.

When the first fluorine-containing polymer contains a structural unit based on TFE, the content amount of the structural unit based on TFE is preferably from 10 to 90 mol%, and more preferably from 20 to 80 mol% relative to the total amount of the first fluorine-containing polymer.

When the first fluorine-containing polymer contains a structural unit based on PAVE, the content amount of the structural unit based on PAVE is preferably from 10 to 90 mol%, and more preferably from 20 to 80 mol% relative to the total amount of the first fluorine-containing polymer. The suitable content amount is the same when PMVE or PPVE is used as PAVE.

The first fluorine-containing polymer is preferably in the following aspects.
Aspect 1: The first fluorine-containing polymer contains a structural unit based on a cyano group-containing monomer, a structural unit based on TFE, and a structural unit based on PAVE.
Aspect 2: The first fluorine-containing polymer contains a structural unit based on a cyano group-containing monomer, a structural unit based on TFE, and a structural unit based on propylene.
Aspect 3: The first fluorine-containing polymer contains a structural unit based on a cyano group-containing monomer, a structural unit based on HFP, and a structural unit based on VdF.

In the case of Aspect 1, the content amount of the structural unit based on TFE is preferably from 25 to 85 mol%, and more preferably from 35 to 75 mol%, relative to the total amount of the first fluorine-containing polymer.

In the case of Aspect 1, the content amount of the structural unit based on PAVE is preferably from 10 to 70 mol%, and more preferably from 20 to 60 mol%, relative to the total amount of the first fluorine-containing polymer. The suitable content amount is the same when PMVE or PPVE is used as PAVE.

In the case of Aspect 2, the content amount of the structural unit based on TFE is preferably from 15 to 75 mol%, and more preferably from 25 to 65 mol%, relative to the total amount of the first fluorine-containing polymer.

In the case of Aspect 2, the content amount of the structural unit based on propylene is preferably from 20 to 80 mol%, and more preferably from 30 to 70 mol%, relative to the total amount of the first fluorine-containing polymer.

In the case of Aspect 3, the content amount of the structural unit based on HFP is preferably from 5 to 40 mol%, and more preferably from 10 to 30 mol%, relative to the total amount of the first fluorine-containing polymer.

In the case of Aspect 3, the content amount of the structural unit based on VdF is preferably from 5 to 85 mol%, and more preferably from 15 to 75 mol%, relative to the total amount of the first fluorine-containing polymer.

The first fluorine-containing polymer preferably has no melting point.

The phrase "has no melting point" means that no melting peak is observed when the melting point of the first fluorine-containing polymer is measured using a differential scanning calorimeter, specifically, no melting peak is observed in a temperature range of 150°C or higher (preferably a temperature range of from 150 to 330°C). The glass transition peak does not correspond to the melting peak.

A specific example of the method of measuring the melting point includes the measurement methods shown in the Examples section.

### [Purification Step]

In the purification step included as necessary in the present production method B, the dispersion containing the first fluorine-containing polymer obtained through the first polymerization step is subjected to a purification treatment. In the purification step, the dispersion obtained in the first polymerization step may be directly subjected to a purification treatment, or may be subjected to a purification treatment after the solid content concentration of the dispersion is adjusted by a concentration adjustment step described later.

From the viewpoint of easily obtaining the second fluorine-containing polymer having desired physical properties, the present production method B preferably includes a purification step. In other words, it is preferable to perform the polymerization of the second monomer in the second polymerization step using the aqueous dispersion after being subjected to the purification treatment in the purification step. Through the purification step, impurities such as a polymerization initiator and a decomposition product thereof can be removed, and a fluorine-containing elastomer having desired physical properties can be easily obtained.

Examples of the purification method include a heat treatment and a method of removing using an ion exchange resin, and a method of bringing a dispersion to be purified into contact with the ion exchange resin is preferable.

The ion exchange resin is preferably a cation exchange resin or an anion exchange resin.

The amount of the ion exchange resin used is preferably 1 to 100 parts by mass, and more preferably from 1 to 50 parts by mass, relative to 100 parts by mass of the amount of the dispersion to be purified used.

Specific examples of the method of bringing the dispersion to be purified into contact with the ion exchange resin include a method of mixing the dispersion to be purified with the ion exchange resin and a method of passing the dispersion to be purified through a column packed with the ion exchange resin.

The purification treatment may be performed a plurality of times.

### [Concentration Adjustment Step]

In the concentration adjustment step included as necessary in the present production method B, the solid content concentration of the dispersion containing the first fluorine-containing polymer may be adjusted. In the concentration adjustment step, for example, at least one of removal of the aqueous medium and addition of the aqueous medium is performed on the dispersion obtained in the first polymerization step or the dispersion obtained through the purification step. In the concentration adjustment step, the solid content concentration may be adjusted by removing only a part of the aqueous medium contained in the dispersion, or solvent substitution in which the aqueous medium contained in the dispersion is removed and another aqueous medium is added may be performed. When the aqueous medium is added in the concentration adjustment step, the aqueous medium to be added may be the same type of aqueous medium as the first aqueous medium, or may be a different type of aqueous medium.

### [Second Polymerization Step]

In the second polymerization step of the present production method B, the second monomer containing TFE is polymerized in the aqueous dispersion containing the first fluorine-containing polymer to obtain a fluorine-containing elastomer containing the first fluorine-containing polymer and the second fluorine-containing polymer.

### <Aqueous Dispersion>

The aqueous dispersion used in the second polymerization step may be obtained by using the dispersion after the first polymerization step as it is, or may be obtained by using the dispersion after the first polymerization step which has undergone at least one of the purification step and the concentration adjustment step. From the viewpoint that a second fluorine-containing polymer having desired physical properties is easily obtained, it is preferable to use a dispersion after the first polymerization step, which has undergone at least the purification step, as an aqueous dispersion.

The content amount of the first fluorine-containing polymer is preferably from 0.01 to 10.0 mass% relative to the total amount of the aqueous dispersion, and is more preferably from 0.01 to 5.0 mass% from the viewpoint that the second fluorine-containing polymer can be more efficiently produced. Among them, it is preferable to satisfy the above range before starting the polymerization of the second monomer.

The aqueous medium contained in the aqueous dispersion used in the second polymerization step is referred to as a second aqueous medium.

Specific examples of the second aqueous medium include those similar to the specific examples of the first aqueous medium. The type of the second aqueous medium may be the same as or different from the type of the first aqueous medium.

Before starting the polymerization of the second monomer, the aqueous dispersion may contain components other than the various components described above.

Specific examples of other components that can be contained in the aqueous dispersion include a chain transfer agent, a reducing agent, and a pH adjusting agent.

Specific examples of a chain transfer agent include ethyl acetate, methanol, ethanol, t-butyl methyl ether, diethyl ether, n-pentane, cyclohexane, methane, 1,4-diiodoperfluorobutane, and propane.

Specific examples of the pH adjusting agent include inorganic salts and ammonia. Specific examples of the inorganic salts include phosphates such as disodium hydrogen phosphate and sodium dihydrogen phosphate, and carbonates such as sodium hydrogen carbonate and sodium carbonate. More preferable specific examples of the phosphate include disodium hydrogen phosphate dihydrate and disodium hydrogen phosphate dodecahydrate.

When the aqueous dispersion contains a chain transfer agent, the content amount of the chain transfer agent is preferably from 0.1 to 5 parts by mass relative to 100 parts by mass of the second aqueous medium.

When the aqueous dispersion contains a pH adjusting agent, the content amount of the pH adjusting agent is preferably from 0.01 to 3.0 parts by mass relative to 100 parts by mass of the second aqueous medium.

### <Second Monomer>

The second monomer contains TFE.

The second monomer may contain a monomer other than TFE.

Examples of a monomer other than TFE include ethylene, propylene, vinyl chloride, vinylidene chloride, chlorotrifluoroethylene, fluoroalkylethylene, VdF, HFP, a fluorine-containing vinyl ether, a fluorine-containing allyl ether, and BO.

Preferable embodiments of BO that may be contained as other monomers are as described above.

The second monomer preferably contains at least one selected from the group consisting of a fluorine-containing vinyl ether and a fluorine-containing allyl ether from the viewpoint of excellent physical properties of the crosslinked rubber article.

In addition, the second monomer preferably contains a cyano group-containing monomer from the viewpoint of excellent physical properties of the crosslinked rubber article.

Preferable embodiments of the fluorine-containing vinyl ether, the fluorine-containing allyl ether, and the cyano group-containing monomer are as described above.

The content amount of TFE is preferably from 10 to 90 mol%, more preferably from 20 to 80 mol%, and still more preferably from 30 to 70 mol% relative to the content amount of the second monomer.

Among them, the second monomer preferably contains TFE and a fluorine-containing vinyl ether, preferably contains TFE, a fluorine-containing vinyl ether, and a cyano group-containing monomer, and more preferably contains TFE, PAVE, and a cyano group-containing monomer.

When the second monomer contains a structural unit based on PAVE, the content amount of PAVE is preferably from 10 to 90 mol% and more preferably from 20 to 80 mol% relative to the total amount of the second monomer. The suitable content amount is the same when PMVE or PPVE is used as PAVE.

When the second monomer contains a cyano group-containing monomer, the content amount of the cyano group-containing monomer is preferably from 0.1 to 10 mol%, and more preferably from 0.5 to 5 mol%, relative to the total amount of the second monomer.

The amount of the second monomer used is preferably from 1 to 60 parts by mass, more preferably from 5 to 50 parts by mass, and still more preferably from 10 to 40 parts by mass, relative to 100 parts by mass of the amount of the second aqueous medium used.

### <Polymerization Initiator>

In the second polymerization step of the present production method B, a polymerization initiator may be used.

Preferable embodiments of the polymerization initiator are as described above.

The amount of the polymerization initiator used is preferably from 0.01 to 5 parts by mass, more preferably from 0.01 to 3 parts by mass, and still more preferably from 0.01 to 2 parts by mass, relative to 100 parts by mass of the amount of the second monomer used.

When a polymerization initiator is used, the polymerization initiator may be added to the reactor in a batch manner or in a divided manner. In the case of addition in a divided manner, the addition may be performed in a stepwise manner or may be performed continuously.

The polymerization temperature is preferably from 10 to 95°C, and more preferably from 15 to 90°C.

The polymerization pressure is preferably from 0.5 to 4.0 MPaG, and more preferably from 0.6 to 3.5 MPaG.

The polymerization time is preferably from 90 to 1000 minutes, and more preferably from 90 to 800 minutes.

### <Step>

Preferably, the second polymerization step of the present production method B is performed under a condition in which an emulsifier having a fluorine atom is substantially absent.

More preferably, the second polymerization step of the present production method B is performed under a condition in which an emulsifier is substantially absent.

Examples of the emulsifier include the above-described emulsifiers.

The phrase "an emulsifier having a fluorine atom is substantially absent" means that the content amount of the emulsifier having a fluorine atom is 10 mass ppm or less, preferably 150 mass ppb or less, and more preferably 50 mass ppb or less, relative to the total amount of the first aqueous medium, in the second polymerization step. The lower limit is 0 mass ppb.

The phrase "an emulsifier is substantially absent" means that the content amount of the emulsifier is 10 mass ppm or less, preferably 150 mass ppb or less, and more preferably 50 mass ppb or less, relative to the total amount of the second aqueous medium, in the second polymerization step. The lower limit is 0 mass ppb.

In the second polymerization step of the present production method B, particles of the second fluorine-containing polymer are produced. Specifically, by the method of producing the second fluorine-containing polymer, an aqueous dispersion in which particles of the second fluorine-containing polymer are dispersed in the aqueous medium is obtained.

### <Second Fluorine-Containing Polymer>

The second fluorine-containing polymer contains a structural unit based on the second monomer. That is, the second fluorine-containing polymer contains a structural unit based on TFE.

The second fluorine-containing polymer does not correspond to an emulsifier having a fluorine atom.

Among them, the second fluorine-containing polymer preferably contains a structural unit based on TFE and a structural unit based on a fluorine-containing vinyl ether, preferably contains a structural unit based on TFE, a structural unit based on a fluorine-containing vinyl ether, and a structural unit based on a cyano group-containing monomer, and more preferably contains a structural unit based on TFE, a structural unit based on PAVE, and a structural unit based on a cyano group-containing monomer.

### <Fluorine-Containing Elastomer>

By performing the second polymerization step of the present production method B, a fluorine-containing elastomer containing the first fluorine-containing polymer and the second fluorine-containing polymer is obtained.

The fluorine-containing elastomer obtained by the present production method B does not correspond to an emulsifier having a fluorine atom.

The content amount of the structural unit based on the cyano group-containing monomer is preferably from 0.1 to 10 mol% and more preferably from 0.3 to 5 mol% relative to the total amount of the fluorine-containing elastomer.

The content amount of the structural unit based on TFE is preferably from 10 to 90 mol% and more preferably from 20 to 80 mol% with respect to the total amount of the fluorine-containing elastomer.

The fluorine-containing elastomer preferably contains a structural unit based on a cyano group-containing monomer, a structural unit based on TFE, and a structural unit based on a fluorine-containing vinyl ether, and more preferably contains a structural unit based on a cyano group-containing monomer, a structural unit based on TFE, and a structural unit based on PAVE.

When the fluorine-containing elastomer contains a structural unit based on PAVE, the content amount of the structural unit based on PAVE is preferably from 10 to 90 mol% and more preferably from 20 to 80 mol% relative to the total amount of the fluorine-containing elastomer. The suitable content amount is the same when PMVE or PPVE is used as PAVE.

The fluorine-containing elastomer is preferably in the following aspects.
Aspect 1: The fluorine-containing elastomer contains a structural unit based on a cyano group-containing monomer, a structural unit based on TFE, and a structural unit based on PAVE.
Aspect 2: The fluorine-containing elastomer contains a structural unit based on a cyano group-containing monomer, a structural unit based on TFE, and a structural unit based on propylene.
Aspect 3: The fluorine-containing elastomer contains a structural unit based on a cyano group-containing monomer, a structural unit based on HFP, and a structural unit based on VdF.

In the case of Aspect 1, the content amount of the structural unit based on TFE is preferably from 25 to 85 mol%, and more preferably from 35 to 75 mol%, relative to the total amount of the fluorine-containing elastomer.

In the case of Aspect 1, the content amount of the structural unit based on PAVE is preferably from 10 to 70 mol%, and more preferably from 20 to 60 mol% relative to the total amount of the fluorine-containing elastomer. The suitable content amount is the same when PMVE or PPVE is used as PAVE.

In the case of Aspect 2, the content amount of the structural unit based on TFE is preferably from 15 to 75 mol%, and more preferably from 25 to 65 mol%, relative to the total amount of the fluorine-containing elastomer.

In the case of Aspect 2, the content amount of the structural unit based on propylene is preferably 20 to 80 mol%, and more preferably from 30 to 70 mol%, relative to the total amount of the fluorine-containing elastomer.

In the case of Aspect 3, the content amount of the structural unit based on HFP is preferably from 5 to 40 mol%, and more preferably from 10 to 30 mol%, relative to the total amount of the fluorine-containing elastomer.

In the case of Aspect 3, the content amount of the structural unit based on VdF is preferably from 5 to 85 mol%, and more preferably from 15 to 75 mol%, relative to the total amount of the fluorine-containing elastomer.

After the second polymerization step of the present production method B, for example, a dispersion in which a fluorine-containing elastomer containing the first fluorine-containing polymer and the second fluorine-containing polymer is dispersed in the second aqueous medium is obtained.

In the dispersion, preferably, the first fluorine-containing polymer and the second fluorine-containing polymer are present in the form of particles.

The first fluorine-containing polymer and the second fluorine-containing polymer may be present separately in a dispersion, but are preferably present in the form of particles containing the first fluorine-containing polymer and the second fluorine-containing polymer, and more preferably are present in the form of particles composed of the first fluorine-containing polymer and the second fluorine-containing polymer (that is, particles of a fluorine-containing elastomer).

In this case, the average particle diameter of the particles of the fluorine-containing elastomer is more preferably 400 nm or less, still more preferably 350 nm or less, and particularly preferably 300 nm or less. The lower limit is preferably 10 nm or more, more preferably 30 nm or more, and still more preferably 50 nm or more.

The method of measuring the average particle diameter of the particles is as described above.

The fluorine-containing elastomer preferably has no melting point.

A specific example of the method of measuring the melting point includes the measurement methods shown in the Examples section.

When the fluorine-containing elastomer obtained by the present production method B is heated in a nitrogen atmosphere under the following Condition 1, the weight reduction rate after a lapse of 1000 minutes from the start of temperature rise is preferably 2.0% or less.

### (Condition 1)

The temperature is raised from 40°C to 90°C at a heating rate of 20°C/min, held at 90°C for 120 minutes, raised from 90°C to 200°C at a heating rate of 20°C/min, held at 200°C for 240 minutes, raised from 200°C to 305°C at a heating rate of 20°C/min, and held at 305°C for 720 minutes.

Details of a method of calculating the weight reduction rate will be described later.

The weight reduction rate is preferably 1.5 mass% or less, and more preferably 1.3 mass% or less from the viewpoint of excellent physical properties and surface smoothness of the crosslinked rubber article. The lower limit is 0 mass%, and may be 0.1 mass% or more.

### [Composition]

A composition of the present disclosure (hereinafter also referred to as "present composition") contains a compound (X), a first fluorine-containing polymer containing a structural unit based on a cyano group-containing monomer and a structural unit based on at least one selected from the group consisting of TFE, HFP, VdF, a fluorine-containing vinyl ether, and a fluorine-containing allyl ether, and a second fluorine-containing polymer containing a structural unit based on TFE, and does not substantially contain an emulsifier having a fluorine atom.

According to the present composition, a crosslinked rubber article having a small compression set and excellent surface smoothness is obtained.

The present composition may be liquid or solid at 25°C.

The present composition is, for example, an aqueous dispersion.

The present composition can be produced, for example, by polymerizing the first monomer containing the compound (X), the cyano group-containing monomer, and at least one selected from the group consisting of TFE, HFP, VdF, a fluorine-containing vinyl ether, and a fluorine-containing allyl ether in the first polymerization step in the present production method B, and performing the second polymerization step in the present production method B.

### <Emulsifier>

The present composition substantially does not contain an emulsifier having a fluorine atom.

The phrase "substantially does not contain an emulsifier having a fluorine atom" means that the content amount of the emulsifier having a fluorine atom is 10 mass ppm or less, preferably 150 mass ppb or less, and more preferably 50 mass ppb or less, relative to the total amount of the composition. The lower limit value of the content amount of the emulsifier having a fluorine atom is 0 mass ppb.

Preferably, the present composition substantially does not contain an emulsifier.

The phrase "substantially does not contain an emulsifier" means that the content amount of the emulsifier is 10 mass ppm or less, preferably 150 mass ppb or less, and more preferably 50 mass ppb or less, relative to the total amount of the composition. The lower limit of the content amount of the emulsifier is 0 mass ppb.

### <Compound (X)>

The present composition contains the compound (X). Preferable embodiments of the compound (X) are as described above. The compound (X) may be present or may not be present as a structural unit in the first fluorine-containing polymer described later. That is, the first fluorine-containing polymer described later may contain a structural unit based on the compound (X) or may not contain a structural unit based on the compound (X).

The content amount of the compound (X) is preferably from 0.1 to 5000 mass ppm, more preferably from 0.2 to 1000 mass ppm, still more preferably from 0.3 to 500 mass ppm, and particularly preferably from 0.5 to 100 mass ppm, relative to the total amount of the present composition.

### <First Fluorine-Containing Polymer>

The first fluorine-containing polymer contained in the present composition contains a structural unit based on a cyano group-containing monomer and a structural unit based on at least one selected from the group consisting of TFE, HFP, VdF, a fluorine-containing vinyl ether, and a fluorine-containing allyl ether.

Preferable embodiments of the cyano group-containing monomer, the fluorine-containing vinyl ether, and the fluorine-containing allyl ether are as described above.

The first fluorine-containing polymer preferably contains a structural unit based on a cyano group-containing monomer, a structural unit based on TFE, and a structural unit based on a fluorine-containing vinyl ether, and more preferably contains a structural unit based on a cyano group-containing monomer, a structural unit based on TFE, and a structural unit based on PAVE.

When the first fluorine-containing polymer contains a structural unit based on TFE, the content amount of the structural unit based on TFE is preferably from 10 to 90 mol%, and more preferably from 20 to 80 mol% relative to the total amount of the first fluorine-containing polymer.

When the first fluorine-containing polymer contains a structural unit based on PAVE, the content amount of the structural unit based on PAVE is preferably from 10 to 90 mol%, and more preferably from 20 to 80 mol% relative to the total amount of the first fluorine-containing polymer. The suitable content amount is the same when PMVE or PPVE is used as PAVE.

The first fluorine-containing polymer is preferably in the following aspects.
Aspect 1: The first fluorine-containing polymer contains a structural unit based on a cyano group-containing monomer, a structural unit based on TFE, and a structural unit based on PAVE.
Aspect 2: The first fluorine-containing polymer contains a structural unit based on a cyano group-containing monomer, a structural unit based on TFE, and a structural unit based on propylene.
Aspect 3: The first fluorine-containing polymer contains a structural unit based on a cyano group-containing monomer, a structural unit based on HFP, and a structural unit based on VdF.

In the case of Aspect 1, the content amount of the structural unit based on TFE is preferably from 25 to 85 mol%, and more preferably from 35 to 75 mol%, relative to the total amount of the first fluorine-containing polymer.

In the case of Aspect 1, the content amount of the structural unit based on PAVE is preferably from 10 to 70 mol%, and more preferably from 20 to 60 mol%, relative to the total amount of the first fluorine-containing polymer. The suitable content amount is the same when PMVE or PPVE is used as PAVE.

In the case of Aspect 2, the content amount of the structural unit based on TFE is preferably from 15 to 75 mol%, and more preferably from 25 to 65 mol%, relative to the total amount of the first fluorine-containing polymer.

In the case of Aspect 2, the content amount of the structural unit based on propylene is preferably from 20 to 80 mol%, and more preferably from 30 to 70 mol%, relative to the total amount of the first fluorine-containing polymer.

In the case of Aspect 3, the content amount of the structural unit based on HFP is preferably from 5 to 40 mol%, and more preferably from 10 to 30 mol%, relative to the total amount of the first fluorine-containing polymer.

In the case of Aspect 3, the content amount of the structural unit based on VdF is preferably from 5 to 85 mol%, and more preferably from 15 to 75 mol%, relative to the total amount of the first fluorine-containing polymer.

The first fluorine-containing polymer preferably has no melting point.

The phrase "has no melting point" means that no melting peak is observed when the melting point of the first fluorine-containing polymer is measured using a differential scanning calorimeter, specifically, no melting peak is observed in a temperature range of 150°C or higher (preferably a temperature range of from 150 to 330°C). The glass transition peak does not correspond to the melting peak.

A specific example of the method of measuring the melting point includes the measurement methods shown in the Examples section.

### <Second Fluorine-Containing Polymer>

That is, the second fluorine-containing polymer contains a structural unit based on TFE.

Among them, the second fluorine-containing polymer preferably contains a structural unit based on TFE and a structural unit based on a fluorine-containing vinyl ether, preferably contains a structural unit based on TFE, a structural unit based on a fluorine-containing vinyl ether, and a structural unit based on a cyano group-containing monomer, and more preferably contains a structural unit based on TFE, a structural unit based on PAVE, and a structural unit based on a cyano group-containing monomer.

In the composition, the first fluorine-containing polymer and the second fluorine-containing polymer are preferably present in the form of particles.

The first fluorine-containing polymer and the second fluorine-containing polymer may be present separately in a composition, but are preferably present in the form of particles containing the first fluorine-containing polymer and the second fluorine-containing polymer, and more preferably are present in the form of particles composed of the first fluorine-containing polymer and the second fluorine-containing polymer (that is, particles of a fluorine-containing elastomer).

In this case, the average particle diameter of the particles of the fluorine-containing elastomer is more preferably 400 nm or less, still more preferably 350 nm or less, and particularly preferably 300 nm or less. The lower limit is preferably 10 nm or more, more preferably 30 nm or more, and still more preferably 50 nm or more.

The method of measuring the average particle diameter of the particles is as described above.

The fluorine-containing elastomer preferably has no melting point.

A specific example of the method of measuring the melting point includes the measurement methods shown in the Examples section.

The content amount of the structural unit based on the cyano group-containing monomer is preferably from 0.1 to 10 mol% and more preferably from 0.3 to 5 mol% relative to the total amount of the first fluorine-containing polymer and the second fluorine-containing polymer.

The content amount of the structural unit based on TFE is preferably from 10 to 90 mol%, and more preferably from 20 to 80 mol% relative to the total amount of the first fluorine-containing polymer and the second fluorine-containing polymer.

The first fluorine-containing polymer and the second fluorine-containing polymer preferably contain a structural unit based on a cyano group-containing monomer, a structural unit based on TFE, and a structural unit based on a fluorine-containing vinyl ether, and more preferably contain a structural unit based on a cyano group-containing monomer, a structural unit based on TFE, and a structural unit based on PAVE.

When at least one of the first fluorine-containing polymer and the second fluorine-containing polymer contains a structural unit based on PAVE, the content amount of the structural unit based on PAVE is preferably from 10 to 90 mol%, and more preferably from 20 to 80 mol% relative to the total amount of the first fluorine-containing polymer and the second fluorine-containing polymer.

The fluorine-containing elastomer containing the first fluorine-containing polymer and the second fluorine-containing polymer is preferably in the following aspects.
Aspect 1: The fluorine-containing elastomer contains a structural unit based on a cyano group-containing monomer, a structural unit based on TFE, and a structural unit based on PAVE.
Aspect 2: The fluorine-containing elastomer contains a structural unit based on a cyano group-containing monomer, a structural unit based on TFE, and a structural unit based on propylene.
Aspect 3: The fluorine-containing elastomer contains a structural unit based on a cyano group-containing monomer, a structural unit based on HFP, and a structural unit based on VdF.

In the case of Aspect 1, the content amount of the structural unit based on TFE is preferably from 25 to 85 mol%, and more preferably from 35 to 75 mol%, relative to the total amount of the fluorine-containing elastomer.

In the case of Aspect 1, the content amount of the structural unit based on PAVE is preferably from 10 to 70 mol%, and more preferably from 20 to 60 mol% relative to the total amount of the fluorine-containing elastomer. The suitable content amount is the same when PMVE or PPVE is used as PAVE.

In the case of Aspect 2, the content amount of the structural unit based on TFE is preferably from 15 to 75 mol%, and more preferably from 25 to 65 mol%, relative to the total amount of the fluorine-containing elastomer.

In the case of Aspect 2, the content amount of the structural unit based on propylene is preferably from 20 to 80 mol%, and more preferably from 30 to 70 mol%, relative to the total amount of the fluorine-containing elastomer.

In the case of Aspect 3, the content amount of the structural unit based on HFP is preferably from 5 to 40 mol%, and more preferably from 10 to 30 mol%, relative to the total amount of the fluorine-containing elastomer.

In the case of Aspect 3, the content amount of the structural unit based on VdF is preferably from 5 to 85 mol%, and more preferably from 15 to 75 mol%, relative to the total amount of the fluorine-containing elastomer.

In the present composition, the content amount of the metal is preferably 50 mass ppm or less, and more preferably 30 mass ppm or less relative to the total solid content amount of the composition. The lower limit is 0 mass ppm.

When the content amount of the metal is 50 mass ppm or less, the surface smoothness of the crosslinked rubber article is further improved.

The metal content amount is measured using an inductively coupled plasma mass spectrometer.

### [Solid Composition]

A solid composition of the present disclosure (hereinafter also referred to as "present solid composition") contains a fluorine-containing elastomer containing a structural unit based on a cyano group-containing monomer, a structural unit based on TFE, and a structural unit based on at least one selected from the group consisting of a fluorine-containing vinyl ether and a fluorine-containing allyl ether.

Further, when the present solid composition is heated in a nitrogen atmosphere under the following Condition 1, the weight reduction rate after a lapse of 1000 minutes from the start of temperature rise is 2.0% or less, and the present solid composition substantially does not contain an emulsifier having a fluorine atom.

### (Condition 1)

The temperature is raised from 40°C to 90°C at a heating rate of 20°C/min, held at 90°C for 120 minutes, raised from 90°C to 200°C at a heating rate of 20°C/min, held at 200°C for 240 minutes, raised from 200°C to 305°C at a heating rate of 20°C/min, and held at 305°C for 720 minutes.

According to the present solid composition, a crosslinked rubber article having a small compression set and excellent surface smoothness is obtained.

The present solid composition is solid at 25°C.

The fluorine-containing elastomer contained in the present solid composition is preferably obtained by polymerization in the presence of the compound (X).

The fluorine-containing elastomer contained in the present solid composition can be produced, for example, by polymerizing the monomer A containing a cyano group-containing monomer, TFE, and at least one selected from the group consisting of a fluorine-containing vinyl ether and a fluorine-containing allyl ether in the present production method A.

The fluorine-containing elastomer contained in the present solid composition can be produced, for example, by polymerizing a first monomer comprising a cyano group-containing monomer and at least one selected from the group consisting of TFE, a fluorine-containing vinyl ether, and a fluorine-containing allyl ether in the first polymerization step of the present production method B, performing the second polymerization step of the present production method B, and removing a liquid component.

### <Emulsifier>

The present solid composition substantially does not contain an emulsifier having a fluorine atom.

The phrase "substantially does not contain an emulsifier having a fluorine atom" means that the content amount of the emulsifier having a fluorine atom is 10 mass ppm or less, preferably 500 mass ppb or less, and more preferably 250 mass ppb or less, relative to the total amount of the solid composition. The lower limit value of the content amount of the emulsifier having a fluorine atom is 0 mass ppb.

Preferably, the present solid composition substantially does not contain an emulsifier.

The phrase "substantially does not contain an emulsifier" means that the content amount of the emulsifier is 10 mass ppm or less, preferably 500 mass ppb or less, and more preferably 250 mass ppb or less, relative to the total amount of the solid composition. The lower limit of the content amount of the emulsifier is 0 mass ppb.

### <Fluorine-Containing Elastomer>

The fluorine-containing elastomer contained in the present solid composition contains a structural unit based on a cyano group-containing monomer, a structural unit based on TFE, and a structural unit based on at least one selected from the group consisting of a fluorine-containing vinyl ether and a fluorine-containing allyl ether. The fluorine-containing elastomer contained in the present solid composition may further contain a structural unit based on the compound (X) or may not further contain a structural unit based on the compound (X).

Preferable embodiments of the compound (X), the cyano group-containing monomer, the fluorine-containing vinyl ether, and the fluorine-containing allyl ether are as described above.

The content amount of the structural unit based on the cyano group-containing monomer is preferably from 0.1 to 10 mol% and more preferably from 0.3 to 5 mol% relative to the total amount of the fluorine-containing elastomer.

The content amount of the structural unit based on TFE is preferably from 10 to 90 mol% and more preferably from 20 to 80 mol% with respect to the total amount of the fluorine-containing elastomer.

The fluorine-containing elastomer preferably contains a structural unit based on a cyano group-containing monomer, a structural unit based on TFE, and a structural unit based on a fluorine-containing vinyl ether, and more preferably contains a structural unit based on a cyano group-containing monomer, a structural unit based on TFE, and a structural unit based on PAVE.

When the fluorine-containing elastomer contains a structural unit based on PAVE, the content amount of the structural unit based on PAVE is preferably from 10 to 90 mol% and more preferably from 20 to 80 mol% relative to the total amount of the fluorine-containing elastomer. The suitable content amount is the same when PMVE or PPVE is used as PAVE.

When the present solid composition is heated in a nitrogen atmosphere under the following Condition 1, the weight reduction rate after a lapse of 1000 minutes from the start of temperature rise is 2.0% or less.

### (Condition 1)

The temperature is raised from 40°C to 90°C at a heating rate of 20°C/min, held at 90°C for 120 minutes, raised from 90°C to 200°C at a heating rate of 20°C/min, held at 200°C for 240 minutes, raised from 200°C to 305°C at a heating rate of 20°C/min, and held at 305°C for 720 minutes.

That is, the weight reduction rate after the heating in the following steps 1 to 6 is continuously performed is 2.0 mass% or less.
Start temperature: 40°C
Atmosphere: nitrogen atmosphere
Step 1: The temperature is raised from 40°C to 90°C at a heating rate of 20°C/min.
Step 2: The temperature is maintained at 90°C for 120 minutes.
Step 3: The temperature is raised from 90°C to 200°C at a heating rate of 20°C/min.
Step 4: The temperature is maintained at 200°C for 240 minutes.
Step 5: The temperature is raised from 200°C to 305°C at a heating rate of 20°C/min.
Step 6: The temperature is maintained at 305°C for 720 minutes.

The weight reduction rate is measured by thermogravimetric analysis of the profile under the above conditions.

Specifically, a sample of the solid composition set at 40°C is subjected to thermogravimetric analysis in which a weight change of the sample is measured while the sample is heated according to the above profile. The weight reduction rate is calculated from the weight of the sample before the start of heating (immediately before step 1) and the weight of the sample after the end of heating (after the end of step 6).

Examples of the apparatus used for thermogravimetric analysis include a differential thermogravimetric analyzer "NEXTA STA Series STA200" (manufactured by Hitachi High-Tech Corporation).

As the sample, a solid composition having a water content of 0.5 mass% or less is used. The water content of the sample is preferably 0.3 mass% or less, more preferably 0.1 mass% or less, and still more preferably 0 mass%.

The water content of the solid composition can be adjusted by a drying treatment. Examples of the drying method include heating and decompression, and a combination thereof.

When the solid composition is dried by heating, the heating temperature is preferably 250°C or lower, more preferably 200°C or lower, still more preferably 150°C or lower. Further, the heating temperature is preferably 60°C or higher from the viewpoint of drying efficiency. The heating time can be appropriately adjusted depending on the water content of the sample, and is preferably 480 to 900 minutes.

The water content of the sample can be measured by an aquameter (for example, a halogen moisture meter).

A more specific method for measuring the weight reduction rate is as described in Examples described later.

The weight reduction rate is preferably 1.5 mass% or less, and more preferably 1.3 mass% or less from the viewpoint of excellent physical properties and surface smoothness of the crosslinked rubber article. The lower limit is 0 mass%, and may be 0.1 mass% or more.

Examples of the method for suppressing the weight reduction rate include adjustment of the amount of the polymerization initiator used during polymerization and the polymerization pressure. Accordingly, it is possible to suppress generation of a substance that causes weight loss.

The emulsifier remaining in the fluorine-containing elastomer may cause weight loss. In order to reduce the amount of the emulsifier, it is preferable to polymerize the monomer under a condition in which the emulsifier is substantially absent.

In the present solid composition, the content amount of the metal is preferably 50 mass ppm or less, and more preferably 30 mass ppm or less relative to the total amount of the solid composition. The lower limit is 0 mass ppm.

When the content amount of the metal is 50 mass ppm or less, the surface smoothness of the crosslinked rubber article is further improved.

The present solid composition preferably has a storage elastic modulus of from 200 to 600 kPa, and more preferably from 250 to 550 kPa.

When the storage elastic modulus is 600 kPa or more, the flowability of the fluorine-containing elastomer during the crosslinking reaction decreases, resulting in reduced molding processability.

When the storage elastic modulus is 200 kPa or less, mold releasability after hot press molding deteriorates, and molding processability deteriorates.

The storage elastic modulus is a measure of the average molecular weight, and a high storage elastic modulus indicates that the molecular weight is large, and a low storage elastic modulus indicates that the molecular weight is small. In the present disclosure, the storage elastic modulus is a storage elastic modulus at a frequency of 50 cpm and 100°C.

### [Crosslinked Rubber Article]

A crosslinked rubber article of the present disclosure (hereinafter also referred to as "present crosslinked rubber article") contains a crosslinked product obtained by crosslinking a fluorine-containing elastomer containing a structural unit based on a cyano group-containing monomer, a structural unit based on TFE, and a structural unit based on at least one selected from the group consisting of a fluorine-containing vinyl ether and a fluorine-containing allyl ether.

The present crosslinked rubber article has a weight reduction rate of 0.5% or less after being immersed in 1,1,1,2,2,3,3,4,4,5,5,6,6-tridecafluorohexane for 12 hours and dried, and substantially does not contain an emulsifier having a fluorine atom.

The present crosslinked rubber article has a small compression set and excellent surface smoothness. In general, in order to reduce the compression set, it is conceivable to increase the number of crosslinking groups in the polymer before being crosslinked, but when the number of crosslinking groups is increased, the surface smoothness tends to decrease. It has been difficult to achieve both reduction in compression set and surface smoothness.

On the other hand, the present crosslinked rubber article contains a crosslinked product of a fluorine-containing elastomer containing a specific structural unit, has a weight reduction rate of 0.5% or less after being immersed in 1,1,1,2,2,3,3,4,4,5,5,6,6-tridecafluorohexane for 12 hours and dried, and does not substantially contain an emulsifier having a fluorine atom, and thus has a small compression set and excellent surface smoothness.

A crosslinked product of the present crosslinked rubber article is produced by crosslinking a fluorine-containing elastomer containing a structural unit based on a cyano group-containing monomer, a structural unit based on TFE, and a structural unit based on at least one selected from the group consisting of a fluorine-containing vinyl ether and a fluorine-containing allyl ether.

The fluorine-containing elastomer to be crosslinked is preferably obtained by polymerization in the presence of the compound (X).

The fluorine-containing elastomer to be crosslinked can be produced, for example, by polymerizing the monomer A containing a cyano group-containing monomer, TFE, and at least one selected from the group consisting of a fluorine-containing vinyl ether and a fluorine-containing allyl ether in the present production method A.

The fluorine-containing elastomer to be crosslinked can be produced, for example, by polymerizing the first monomer containing the cyano group-containing monomer, TFE, and at least one selected from the group consisting of a fluorine-containing vinyl ether and a fluorine-containing allyl ether in the first polymerization step in the present production method B, and performing the second polymerization step in the present production method B.

### <Weight Reduction Rate>

The crosslinked rubber article has a weight reduction rate of 0.5% or less after being immersed in 1,1,1,2,2,3,3,4,4,5,5,6,6-tridecafluorohexane for 12 hours and dried.

The method of calculating the weight reduction rate is as follows.

After the crosslinked rubber article is immersed in 1,1,1,2,2,3,3,4,4,5,5,6,6-tridecafluorohexane for 12 hours, vacuum drying is performed at 100°C until drying is completed.

The mass is measured every 12 hours, and it is determined that the drying is completed when the change rate from the previous measurement value is 0.01 mass% or less. Specifically, when the following Formula (M) is satisfied, it is determined that the drying is completed. $\left\{X\left(n\right)-X\left(n-1\right)\right\} / X \left(n-1\right) \times 100 \leq 0.01$ (M)
X0: a mass of a crosslinked rubber article
X1: a mass of the crosslinked rubber article when it is determined that drying has been completed
X(n): a mass of the crosslinked rubber article after (12 × n) hours have elapsed from a start of drying (n is an integer of 1 or more)
X(n-1): a mass of the crosslinked rubber article after {12(n-1)} hours have elapsed from a start of drying (n is an integer of 1 or more)

The weight reduction rate is calculated using the following formula. $Weight reduction rate \left(%\right) = \left\{X1/X0\right\} \times 100$

From the viewpoint of excellent surface smoothness, the weight reduction rate is preferably 0.5% or less, and more preferably 0.3% or less. The lower limit is, for example, 0%.

### <Emulsifier>

The present crosslinked rubber article substantially does not contain an emulsifier having a fluorine atom.

The phrase "substantially does not contain an emulsifier having a fluorine atom" means that the content amount of the emulsifier having a fluorine atom is 10 mass ppm or less, preferably 500 mass ppb or less, and more preferably 250 mass ppb or less, relative to the total amount of the crosslinked rubber article. The lower limit value of the content amount of the emulsifier having a fluorine atom is 0 mass ppb.

Preferably, the present crosslinked rubber article substantially does not contain an emulsifier.

The phrase "substantially does not contain an emulsifier" means that the content amount of the emulsifier is 10 mass ppm or less, preferably 150 mass ppb or less, and more preferably 50 mass ppb or less, relative to the total amount of the crosslinked rubber article. The lower limit of the content amount of the emulsifier is 0 mass ppb.

### <Crosslinked Product of Fluorine-Containing Elastomer>

A crosslinked product contained in the present crosslinked rubber article is a crosslinked product obtained by crosslinking a fluorine-containing elastomer containing a structural unit based on a cyano group-containing monomer, a structural unit based on TFE, and a structural unit based on at least one selected from the group consisting of a fluorine-containing vinyl ether and a fluorine-containing allyl ether.

Preferable embodiments of the cyano group-containing monomer, the fluorine-containing vinyl ether, and the fluorine-containing allyl ether are as described above.

The content amount of the structural unit based on the cyano group-containing monomer is preferably from 0.1 to 10 mol% and more preferably from 0.3 to 5 mol% relative to the total amount of the fluorine-containing elastomer.

The content amount of the structural unit based on TFE is preferably from 10 to 90 mol% and more preferably from 20 to 80 mol% with respect to the total amount of the fluorine-containing elastomer.

The crosslinked product is a crosslinked product of the fluorine-containing elastomer preferably containing a structural unit based on a cyano group-containing monomer, a structural unit based on TFE, and a structural unit based on a fluorine-containing vinyl ether, and more preferably containing a structural unit based on a cyano group-containing monomer, a structural unit based on TFE, and a structural unit based on PAVE.

When the fluorine-containing elastomer contains a structural unit based on PAVE, the content amount of the structural unit based on PAVE is preferably 10 to 90 mol% and more preferably 20 to 80 mol% relative to the total amount of the fluorine-containing elastomer. The suitable content amount is the same when PMVE or PPVE is used as PAVE.

### <Crosslinking>

The method of crosslinking the fluorine-containing elastomer is not particularly limited, but a heating method is preferable.

Specific examples of the crosslinking method by heating include hot press crosslinking, steam crosslinking, injection molding crosslinking, hot air crosslinking, molten salt crosslinking, fluidized bed crosslinking, and funnel crosslinking.

The heating condition is preferably from 100 to 400°C for 1 second to 24 hours.

The crosslinked product obtained by heating (primarily crosslinking) the fluorine-containing elastomer may be further heated to be secondarily crosslinked. By performing secondary crosslinking, the mechanical properties, compression set, and other properties of the crosslinked product can be stabilized or improved.

The heating condition for performing secondary crosslinking is preferably from 80 to 350°C for 30 minutes to 48 hours.

Examples of the crosslinking method other than heating include a method of irradiating a fluorine-containing elastomer with radiation. Specific examples of the radiation to be irradiated include electron beams and ultraviolet rays.

### <Structure>

The crosslinked product preferably has a heterocyclic structure, and more preferably has at least one structure of an oxazole structure and a triazine structure.

In the crosslinked product, since the fluorine-containing elastomer before crosslinking contains a structural unit based on a cyano group-containing monomer, a cyano group and a crosslinking agent can be reacted to form a heterocyclic structure (preferably, an oxazole ring).

In addition, in the crosslinked product, since the fluorine-containing elastomer before crosslinking contains a structural unit based on a cyano group-containing monomer, a heterocyclic structure (preferably, a triazine structure) can be formed by reacting cyano groups with each other.

Specific examples of a crosslinking agent include: a compound having two or more amino groups (hereinafter also referred to as a "polyamine compound"); an organic peroxide; an organic ammonia-generating compound, that is, a compound capable of generating ammonia upon heating; and an organotin compound such as an allenyl-tin curing agent.

The crosslinking agent is preferably a polyamine compound, and more preferably a compound having two amino groups, from the viewpoint of obtaining a crosslinked rubber article having excellent crosslinkability of the fluorine-containing elastomer and smaller compression set.

The polyamine compound may be a compound in which a hydrogen atom of an aliphatic hydrocarbon is substituted with an amino group or a compound in which a hydrogen atom of an aromatic hydrocarbon is substituted with an amino group, but from the viewpoint of more excellent effect of the present invention, a compound in which a hydrogen atom of an aromatic hydrocarbon is substituted with an amino group is preferable.

The polyamine compound preferably contains a fluorine atom. Thereby, since compatibility with the fluorine-containing copolymer is improved, a crosslinked rubber article having a smaller compression set at a high temperature is obtained.

Specific examples of the polyamine compound include hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter also referred to as "BOAP", also known as bisaminophenol AF), 2,2-bis(3,4-diaminophenyl)propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, adipic dihydrazide, and a compound represented by Formula (XII) of Japanese Patent No. 5833657, and BOAP is preferable.

The present crosslinked rubber article has a small compression set and excellent surface smoothness, and thus can be applied to, for example, the following applications.

The present crosslinked rubber article is suitable for materials such as O-rings, sheets, gaskets, oil seals, diaphragms, and V-rings.

Further, the present crosslinked rubber article can be applied to a heat-resistant and chemical-resistant sealing material, a heat-resistant and oil-resistant sealing material, a wire covering material, a sealing material for semiconductor manufacturing apparatus, a sealing material for liquid crystal display panel manufacturing apparatus, a sealing material for light-emitting diode manufacturing apparatus, a corrosion-resistant rubber coating material, a sealing material for urea-based grease and the like, a rubber coating material, a bonded rubber, a hose, a tube, a calender sheet (roll), a sponge, a rubber roll, a member for oil drilling, a heat dissipation sheet, a solution-crosslinked product, a rubber sponge, a bearing seal (for urea grease, and the like), a lining (chemical-resistant), an insulating sheet for automobiles, an insulating sheet for electronic devices, a rubber band for watches, a packing for endoscopes (amine-resistant), a bellows hose (processed from a calender sheet), a packing/valve for water heaters, a fender (for marine civil engineering and ships), a fiber and a nonwoven fabric (protective clothing, and the like), a substrate sealing material, a rubber glove, a stator of a single-axis eccentric screw pump, a component for a urea SCR system, a vibration isolator, a vibration damping material, a sealing agent, an additive to another material, and a toy.

### Examples

Hereinafter, the present invention will be described in detail with reference to examples. Examples 1 to 7 and 11 are Examples, and Examples 8 to 10 are Comparative Examples. However, the present invention is not limited to these examples.

### [Measurement Method and Evaluation Method of Fluorine-Containing Polymer or Fluorine-Containing Elastomer]

Various measurement methods and evaluation methods are as follows.

### <Average Particle Diameter of Particles>

The aqueous dispersion of each example described later was degassed at 25°C for 5 minutes, and nitrogen gas was pressurized to 0.2 MPaG and then purged, and returned to atmospheric pressure to obtain a measurement sample. The average particle diameter of the obtained measurement sample was measured with the number of integrations set to 100 using a dynamic light scattering particle diameter distribution analyzer (Otsuka Electronics Co., Ltd., ELSZ), and taken as the average particle diameter of the particles in each aqueous dispersion.

### <Solid Content Concentration>

After 2.0 g of the aqueous dispersion of each example described later is heated at 170°C for 20 minutes, the mass (g) of the residue is weighed, and the solid content concentration is calculated by the following formula. 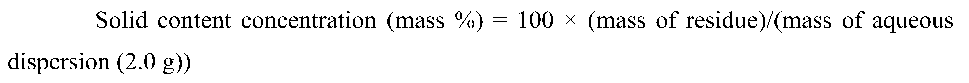 Solid content concentration (mass %) = 100 × (mass of residue)/(mass of aqueous dispersion (2.0 g))

### <Ratio of Each Structural Unit>

The ratio of each structural unit in the fluorine-containing polymer or the fluorine-containing elastomer was determined from ¹⁹F-NMR analysis and infrared absorption spectrum analysis.

### <Melting Point>

The aqueous dispersion to be described later in each example was subjected to freeze aggregation, and then filtered off to obtain a fluorine-containing polymer. 5 mg of a sample of the obtained fluorine-containing polymer was weighed in an aluminum pan, and heated from 20°C to 360°C at a heating rate of 10°C/min in an air atmosphere using DSC600 manufactured by Hitachi, Ltd., and the presence or absence of a melting point peak was confirmed.

### <Water Content>

Using the fluorine-containing elastomer obtained in each Example, measurement was performed using a halogen moisture analyzer.

### <Content Amount of Metal>

The fluorine-containing elastomer was placed in a platinum crucible, incinerated in a high-temperature electric heating furnace, and then subjected to a white sulfuric acid smoke treatment. Subsequently, the residue was dissolved in dilute nitric acid. With respect to a solution dissolved in dilute nitric acid, the total content amount of 29 types of metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb, and Bi), measured by an absolute calibration curve method using an inductively coupled plasma mass spectrometer (ICP-MS 7500cs manufactured by Agilent Technologies), was determined.

### <Weight Reduction Rate>

10 mg of a sample from the fluorine-containing elastomer obtained in each example was weighed in an aluminum pan and set in STA200 manufactured by Hitachi, Ltd. From the time point when the starting temperature was set to 40°C and the sample temperature was stabilized, the mass change of the sample was measured in a nitrogen atmosphere (nitrogen gas flow rate: 100 mL/min) while continuously heating according to the following profile from step 1 to step 6. Based on the mass of the sample before the temperature was raised from 40°C, the weight reduction rate at the time point when 1000 minutes had elapsed from the start of the temperature rise was calculated.

The above thermogravimetric analysis was performed using a differential thermogravimetric analyzer "NEXTA STA Series STA200" (manufactured by Hitachi High-Tech Corporation).
Step 1: The temperature is raised from 40°C to 90°C at a heating rate of 20°C/min.
Step 2: The temperature is maintained at 90°C for 120 minutes.
Step 3: The temperature is raised from 90°C to 200°C at a heating rate of 20°C/min.
Step 4: The temperature is maintained at 200°C for 240 minutes.
Step 5: The temperature is raised from 200°C to 305°C at a heating rate of 20°C/min.
Step 6: The temperature is maintained at 305°C for 720 minutes.

### <Storage Elastic Modulus>

A rubber workability analysis apparatus "PREMIER RPA (manufactured by Alpha Technologies, die shape: D0380)" was used as a measuring apparatus. The solid composition obtained in each example was kneaded with 2 rolls at room temperature (25°C) for 10 minutes to prepare a sheet having a thickness of 3 mm. The thickness of the sheet was adjusted by adjusting the gap between two rolls. The obtained sheet was cut to have a weight of about 10 g to obtain a cut sheet. The cut sheet was sandwiched between two polyester films (ALFA Technologies PART#F0311-S, 130 mm × 130 mm × 24 µm) to obtain a measurement sample. The sample was placed on a die of the measuring apparatus. The temperature of the die was set to 100°C in advance.

Next, the sample was held at 100°C for 2 minutes under the conditions of a frequency of 30 cpm and an amplitude angle of 0.2 deg, and then the amplitude angle was changed to 0.5 deg and the frequency was increased to 10 cpm, 20 cpm, 50 cpm, 100 cpm, 200 cpm, 500 cpm, 1000 cpm, and 2000 cpm to measure the storage elastic modulus. The storage elastic modulus at a frequency of 50 cpm and 100°C at this time was defined as a storage elastic modulus G' (unit: kPa) of the sample.

### <Method for Measuring Emulsifier Contained in Solid Composition>

### (Preparation of Measurement Sample)

The solid composition obtained in each example described later was freeze-pulverized under the following conditions using a freeze pulverizer (Freezer/Mill 6775 manufactured by SPEX). When the solid composition was subjected to freeze pulverization, 10 mass% of dibutylhydroxytoluene (BHT) was added in advance with respect to the total mass of the solid composition to obtain a pulverized powder. Conditions for freeze pulverization were as follows: solid composition: 3 g, BHT: 0.3 g, run time: 5 min, rate: 15 cps, and cycle: 3.

To 0.25 g of the pulverized powder thus obtained, 5 mL of methanol was added, and the obtained mixture was subjected to an ultrasonic treatment at 50°C for 2 hours, followed by centrifugation (5000 rpm, 5 min) to precipitate each fluorine-containing polymer, and the supernatant was used as an extract solution. The obtained extract solution was subjected to LC/MS/MS measurement. With respect to a fluorine-containing emulsifier and a hydrocarbon emulsifier in the extract solution, measurement was performed using a liquid chromatograph mass spectrometer. The configuration of the measuring device and the LC-MS measurement conditions are shown in Table 1. Using aqueous solutions of a fluorine-containing emulsifier and a hydrocarbon emulsifier each having a known concentration, aqueous solutions having five or more levels of content amount were prepared, LC/MS analysis of the aqueous solutions at the respective content amounts was performed, a relationship between the content amount and an area corresponding to the content amount was plotted, and a calibration curve was drawn. Using the calibration curve, an area of an LC/MS chromatogram of a fluorine-containing emulsifier and a hydrocarbon emulsifier in the extract solution was converted into a content amount of the fluorine-containing emulsifier and the hydrocarbon emulsifier.

**[Table 1]**

| LC Section | | |
|---|---|---|
| Apparatus | CTO-40C, manufactured by Shimadzu Corporation | |
| Column name | Shim-pack Velox SP-C18 2.7µm,150mmx2.1mm | |
| Mobile phase | A 20mM CH₃COONH₄/H₂O | |
| | B CH₃OH | |
| | 0→0.5min | A:B=80:20 → A:B=75:25 Linear gradient |
| | 0.5→3.5min | A:B=75:25 → A:B=70:30 Linear gradient |
| | 3.5→5.0min | A:B=70:30 → A:B=40:60 Linear gradient |
| | 5.0→9.5min | A:B=40:60 → A:B=20:80 Linear gradient |
| | 9.5→10.0min | A:B=20:80 → A:B=2:98 Linear gradient |
| | 10.0→20.0min | A:B=2:98 |
| | 20.0→20.1min | A:B=2.0:98.0 → A: B=80:20 Linear gradient |
| | 20.1→25.0min | A:B=80:20 |
| Flow rate | | 0.25 mL/min |
| Column temperature | | 40°C |
| Sample injection volume | | 2 µL |
| MS Section | | |
| Apparatus | | LCMS-8060NX, manufactured by Shimadzu Corporation |
| Measurement mode | | MRM(Multiple Reaction Monitoring) |
| | | ESI(Electrospray ionization) |
| Ionization method | | Negative mode |

MRM measurement parameters are appropriately selected according to a structure of a fluorine emulsifier and a hydrocarbon emulsifier to be measured. For the MRM parameters, literature values can be used, or the MRM parameters may be calculated using an LC-MS apparatus. When determining the MRM parameters using an LC-MS apparatus, the procedure is specifically as follows. Using an LC/MS apparatus (Shimadzu Corporation, LCMS-8060NX), a product ion search is selected, a molecular weight of a fluorine emulsifier and a hydrocarbon emulsifier to be measured is input, and precursor ions, precursor adjustment, voltage optimization, and product m/z optimization are performed. The calculated MRM measurement parameters are used. As an example, the MRM measurement parameters of compounds (S1) and (S2) which are emulsifiers having a fluorine atom are shown in the table. In Formulas (S1) and (S2), M^{S} represents a hydrogen atom, a metal atom, NR₄ (R may be the same or different, and represents a hydrogen atom or an organic group having 1 to 10 carbon atoms), imidazolium optionally having a substituent, pyridinium optionally having a substituent, or phosphonium optionally having a substituent.

F-(CF₂)ₙ₁-COOM^{S} (S1)

F-(CF₂)ₙ₂-SO₃M^{S} (S2)

Here, n1 represents an integer of 3 to 17, and n2 represents an integer of 4 to 12.

**[Table 2]**

| Compound | Number of carbon atoms | n = | Precursor | Product |
|---|---|---|---|---|
| Perfluorobutanoic acid | 4 | 3 | 213 | 169 |
| Perfluoropentanoic acid | 5 | 4 | 263 | 219 |
| Perfluorohexanoic acid | 6 | 5 | 313 | 269 |
| Perfluoroheptanoic acid | 7 | 6 | 363 | 319 |
| Perfluorooctanoic acid | 8 | 7 | 413 | 369 |
| Perfluorononanoic acid | 9 | 8 | 463 | 419 |
| Perfluorodecanoic acid | 10 | 9 | 513 | 469 |
| Perfluoroundecanoic acid | 11 | 10 | 563 | 519 |
| Perfluorododecanoic acid | 12 | 11 | 613 | 569 |
| Perfluorotridecanoic acid | 13 | 12 | 663 | 619 |
| Perfluorotetradecanoic acid | 14 | 13 | 713 | 669 |
| Perfluorohexadecanoic acid | 16 | 15 | 813 | 769 |
| Perfluorooctadecanoic acid | 18 | 17 | 913 | 869 |

**[Table 3]**

| Compound | Number of carbon atoms | n = | Precursor | Product |
|---|---|---|---|---|
| Perfluorobutanesulfonic acid | 4 | 4 | 299 | 99 |
| Perfluoropentanesulfonic acid | 5 | 5 | 349 | 99 |
| Perfluorohexanesulfonic acid | 6 | 6 | 399 | 99 |
| Perfluoroheptanesulfonic acid | 7 | 7 | 449 | 99 |
| Perfluorooctanesulfonic acid | 8 | 8 | 499 | 99 |
| Perfluorononanesulfonic acid | 9 | 9 | 549 | 99 |
| Perfluorodecanesulfonic acid | 10 | 10 | 599 | 99 |
| Perfluorododecanesulfonic acid | 12 | 12 | 699 | 99 |

### (Quantification of Fluorine Emulsifier and Hydrocarbon Emulsifier Contained in Solid Sample)

Specifically, first, methanol standard solutions of a fluorine emulsifier and a hydrocarbon emulsifier each having known concentrations of 1 to 180 ng/g were prepared at five levels, and "a" was determined according to Formula (A1) by linear approximation from respective sample concentrations and peak integrated values. $A = a \times X$ (A1) A: a peak area of each emulsifier, X: a concentration of each emulsifier (ng/g)

Subsequently, the amount of emulsifier contained in the extract solution was calculated using Formula (A2). Note that "a" in Formula (A2) means "a" obtained by Formula (A1) above. $XCm = ACm / a$ (A2)
XCm: a content amount of an emulsifier in each extract solution (ng/g)
ACm: a peak area of an emulsifier in each extract solution

The limit of quantification in this measurement is 1 ng/g.

The content amount (ZCm) of the emulsifier in the solid composition relative to the total mass of the solid composition was determined by the following Formula (A3). $ZCm = XCm \times ρ 1 \times La / W 1$ (A3)
ZCm: a content amount of an emulsifier contained in a solid composition
ρ1: a density of an extraction solvent (methanol in each Example)
La: a volume of an extraction solvent (5 mL in each Example)
W1: a sample mass used for extraction (2.5 g of a solid composition in each Example)

### [Example 1]

Ultrapure water (1206 L), a 50 mass% aqueous solution of sodium 2-acrylamide-2-methyl-1-propanesulfonate (NaAAMPS, corresponding to "compound (X)") (30 µL), PMVE (81 g), TFE (17 g), and 3.4 g of CF₂=CFOCF₂CF(CF₃)OCF₂CF₂CN(8CNVE) were added to a 2.2 L stainless steel pressure-resistant reactor, and the temperature was raised to 80°C. The internal pressure of the reactor when the temperature reached 80°C was 1.4 MPaG.

Next, an ammonium persulfate aqueous solution (2.5 mass%, 7 g) was added to initiate polymerization. Since the pressure in the reactor decreased with the start of polymerization, TFE was added and the pressure was kept constant. While an ammonium persulfate aqueous solution was intermittently added, 12 g of PMVE and 1.26 g of 8CNVE were fed under pressure each time 16 g of TFE was fed under pressure. When an amount of TFE added after the start of polymerization reached 160 g, addition of TFE and PMVE to be fed under pressure after the start of polymerization was stopped, an internal temperature of the reactor was cooled to 10°C to stop the polymerization reaction, gas remaining in the reactor was recovered, and then a liquid was withdrawn to obtain an aqueous dispersion A1.

The total amount of TFE added before the start of polymerization was 17 g, and the total amount of PMVE was 82 g.

The total amount of TFE added after the start of polymerization was 160 g, and the total amount of PMVE was 108 g.

The total amount of TFE added was 177 g, the total amount of PMVE added was 190 g, and the total amount of 8CNVE added was 16.0 g. The average particle size of the polymer particles in the aqueous dispersion A1 was 70.2 nm.

The aqueous dispersion A1 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer A1.

The obtained fluorine-containing elastomer A1 was analyzed by NMR, and the result showed that the composition was PMVE/TFE/8CNVE = 31.0/68.4/0.6 (molar ratio). In addition, the fluorine-containing elastomer A1 did not have a melting point. The water content of the fluorine-containing elastomer A1 was 0.0 mass%.

### [Example 2]

An aqueous dispersion A2 was obtained in the same manner as in Example 1 except that the total amount of TFE added after the start of polymerization was 150 g and the total amount of PMVE was 126 g.

The total amount of TFE added was 167 g, the total amount of PMVE added was 207 g, and the total amount of 8CNVE added was 16.0 g. The average particle size of the polymer particles in the aqueous dispersion A2 was 72.7 nm.

The aqueous dispersion A2 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer A2.

The obtained fluorine-containing elastomer A2 was analyzed by NMR, and the result showed that the composition was PMVE/TFE/8CNVE = 33.5/65.8/0.7 (molar ratio). In addition, the fluorine-containing elastomer A2 did not have a melting point. The water content of the fluorine-containing elastomer A2 was 0.0 mass%.

### [Example 3]

An aqueous dispersion A3 was obtained in the same manner as in Example 1 except that the total amount of TFE added after the start of polymerization was 400 g and the total amount of PMVE was 288 g.

The total amount of TFE added was 417 g, the total amount of PMVE added was 369 g, and the total amount of 8CNVE added was 33.6 g. The average particle size of the polymer particles in the aqueous dispersion A3 was 97.1 nm.

The aqueous dispersion A3 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer A3.

The obtained fluorine-containing elastomer A3 was analyzed by NMR, and the result showed that the composition was PMVE/TFE/8CNVE = 30.1/69.5/0.4 (molar ratio). In addition, the fluorine-containing elastomer A3 did not have a melting point. The water content of the fluorine-containing elastomer A3 was 0.0 mass%.

### [Example 4]

### <First Polymerization Step>

Ultrapure water (1206 g), a 50 mass% aqueous solution of NaAAMPS (20 µL, 10 mg as NaAAMPS), PMVE (72 g), 8CNVE (3.4 g), and TFE (15 g) were added to a 2.2 L stainless steel pressure-resistant reactor, and the temperature was raised to 90°C while stirring. The internal pressure of the reactor at 90°C was 1.4 MPaG.

Next, an ammonium persulfate aqueous solution (2.5 mass%, 7 g) was added to initiate polymerization. Since the pressure in the reactor decreased with the start of polymerization, TFE was added and the pressure was kept constant. This was repeated, and when an amount of TFE added after the start of polymerization reached 25 g, addition of TFE to be fed under pressure after the start of polymerization was stopped, an internal temperature of the reactor was cooled to 10°C to stop the polymerization reaction, gas remaining in the reactor was recovered, and then a liquid was withdrawn to obtain a raw material solution B1.

The total amount of TFE added before the start of polymerization was 15 g, and the total amount of PMVE was 72 g.

The total amount of TFE added after the start of polymerization was 25 g, and the total amount of PMVE was 0 g.

The total amount of TFE added was 40 g, and the total amount of PMVE added was 72 g.

The average particle diameter of the particles of the first fluorine-containing polymer B1-1 in the raw material solution B1 was 43.5 nm.

The solid content concentration of the raw material solution B1 was 3.3 mass%.

The raw material solution B1 was subjected to freeze coagulation and then filtered off, and the obtained first fluorine-containing polymer B1-1 was washed with ultrapure water. Thereafter, vacuum drying was performed at 100°C.

The obtained first fluorine-containing polymer B1-1 was analyzed by NMR, and the result showed that PMVE/TFE/8CNVE = 30.269.1/0.9 (molar ratio). The first fluorine-containing polymer B1-1 did not have a melting point.

### <Purification Step>

HPR4002Cl (manufactured by DuPont, anion exchange resin, 40 g) was added to the raw material solution B1 (1000 g). After 60 minutes from the start of stirring, the raw material solution and the anion exchange resin were separated by filtration. Dowex Monosphere 650C (manufactured by DuPont, cation exchange resin, 40 g) was added to the filtered raw material solution.

After 60 minutes from the start of stirring, the cation exchange resin was separated by filtration to obtain a raw material solution B2.

### <Second Polymerization Step>

The raw material solution B2 (850 g), ultrapure water (332 g), 8CNVE (3.4 g), PMVE (81 g), and TFE (17 g) were added to a 2.2 L stainless steel pressure-resistant reactor, and the temperature was raised to 80°C while stirring. The internal pressure of the reactor at 0°C was 1.4 MPaG. Next, an ammonium persulfate aqueous solution (2.5 mass%, 7 g) was added to initiate polymerization. Since the pressure in the reactor decreased with the start of polymerization, TFE was added and the pressure was kept constant. Thereafter, while an ammonium persulfate aqueous solution was intermittently added, 12 g of PMVE and 1.3 g of 8CNVE were fed under pressure each time 16 g of TFE was fed under pressure. When an amount of TFE added after the start of polymerization reached 408 g, addition of TFE and PMVE to be fed under pressure after the start of polymerization was stopped, an internal temperature of the reactor was cooled to 10°C to stop the polymerization reaction, gas remaining in the reactor was recovered, and then a liquid was withdrawn to obtain a second aqueous dispersion B2-1.

The total amount of added 8CNVE was 16.0 g. The total amount of monomers added before the start of polymerization was 17 g for TFE and 81 g for PMVE.

The total amount of TFE added after the start of polymerization was 168 g, and the total amount of PMVE was 108 g. The total amount of TFE added was 185 g, and the total amount of PMVE added was 189 g.

The second aqueous dispersion B2-1 was a dispersion in which particles containing the first fluorine-containing polymer B1-1 and the second fluorine-containing polymer B1-2 were dispersed in an aqueous medium. The average particle size of the particles in the aqueous dispersion B2-1 was 100 nm.

The second aqueous dispersion B2-1 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer B1 containing the first fluorine-containing polymer B1-1 and the second fluorine-containing polymer B1-2.

The obtained fluorine-containing elastomer B1 was analyzed by NMR, and the result showed that the composition was PMVE/TFE/8CNVE = 31.2/68.3/0.5 (molar ratio). In addition, the fluorine-containing elastomer B1 did not have a melting point. The water content of the fluorine-containing elastomer B1 was 0.2 mass%.

### [Example 5]

### <First Polymerization Step>

Ultrapure water (1206 g), a 50 mass% aqueous solution of NaAAMPS (20 µL, 10 mg as NaAAMPS), PMVE (72 g), PMAE (2 g), 8CNVE (3.4 g), and TFE (15 g) were added to a 2.2 L stainless steel pressure-resistant reactor, and the temperature was raised to 90°C while stirring. The internal pressure of the reactor at 90°C was 1.4 MPaG.

Next, an ammonium persulfate aqueous solution (2.5 mass%, 7 g) was added to initiate polymerization. Since the pressure in the reactor decreased with the start of polymerization, TFE was added and the pressure was kept constant. This was repeated, and when an amount of TFE added after the start of polymerization reached 25 g, addition of TFE to be fed under pressure after the start of polymerization was stopped, an internal temperature of the reactor was cooled to 10°C to stop the polymerization reaction, gas remaining in the reactor was recovered, and then a liquid was withdrawn to obtain a raw material solution B3.

The total amount of TFE added before the start of polymerization was 15 g, and the total amount of PMVE was 72 g.

The total amount of TFE added after the start of polymerization was 25 g, and the total amount of PMVE was 0 g.

The total amount of TFE added was 40 g, and the total amount of PMVE added was 72 g.

The average particle diameter of the particles of the first fluorine-containing polymer B2-1 in the raw material solution B3 was 43.5 nm.

The solid content concentration of the raw material solution B3 was 3.3 mass%.

The raw material solution B3 was subjected to freeze coagulation and then filtered off, and the obtained first fluorine-containing polymer B2-1 was washed with ultrapure water. Thereafter, vacuum drying was performed at 100°C.

The obtained first fluorine-containing polymer B2-1 was analyzed by NMR, and the result showed that PMVE/PMAE/TFE/8CNVE = 33.2/0.5/65.1/0.7 (molar ratio). The first fluorine-containing polymer B2-1 did not have a melting point.

### <Purification Step>

A purification step was performed in the same manner as in Example 4 to obtain a raw material solution B4.

### <Second Polymerization Step>

A second polymerization step was performed in the same manner as in Example 4 to obtain a second aqueous dispersion B2-2.

The second aqueous dispersion B2-2 was a dispersion in which particles containing the first fluorine-containing polymer B2-1 and the second fluorine-containing polymer B2-2 were dispersed in an aqueous medium. The average particle size of the particles of the aqueous dispersion B2-2 was 96 nm.

The second aqueous dispersion B2-2 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer B2 containing the first fluorine-containing polymer B2-1 and the second fluorine-containing polymer B2-2.

The obtained fluorine-containing elastomer B2 was analyzed by NMR, and the result showed that the composition was PMVE/PMAE/TFE/8CNVE = 30.1/0.1/69.3/0.5 (molar ratio). In addition, the fluorine-containing elastomer B2 did not have a melting point. The water content of the fluorine-containing elastomer B2 was 0.2 mass%.

### [Example 6]

Ultrapure water (1206 L), a 0.25 mass% aqueous solution of sodium vinylsulfonate (NaVSA, 20 g, NaVSA: 50 mg), PMVE (81 g), TFE (17 g), PMAE (2 g), and 8CNVE (3.4 g) were added to a 2.2 L stainless steel pressure-resistant reactor, and the temperature was raised to 80°C while stirring. The internal pressure of the reactor at 80°C was 1.4 MPaG.

Next, an ammonium persulfate aqueous solution (2.5 mass%, 7 g) was added to initiate polymerization. Since the pressure in the reactor decreased with the start of polymerization, TFE was added and the pressure was kept constant. While an ammonium persulfate aqueous solution was intermittently added, 12 g of PMVE and 1.26 g of 8CNVE were fed under pressure each time 16 g of TFE was fed under pressure. When an amount of TFE added after the start of polymerization reached 160 g, addition of TFE and PMVE to be fed under pressure after the start of polymerization was stopped, an internal temperature of the reactor was cooled to 10°C to stop the polymerization reaction, gas remaining in the reactor was recovered, and then a liquid was withdrawn to obtain an aqueous dispersion A4. The average particle size of the polymer particles in the aqueous dispersion A4 was 200 nm.

The total amount of TFE added before the start of polymerization was 17 g, and the total amount of PMVE was 82 g.

The total amount of TFE added after the start of polymerization was 160 g, and the total amount of PMVE was 108 g.

The total amount of TFE added was 177 g, the total amount of PMVE added was 190 g, and the total amount of 8CNVE added was 16.0 g.

The aqueous dispersion A4 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer A4.

The obtained fluorine-containing elastomer A4 was analyzed by NMR, and the result showed that the composition was PMVE/PMAE/TFE/8CNVE = 31.6/0.1/67.7/0.6 (molar ratio). In addition, the fluorine-containing elastomer A4 did not have a melting point. The water content of the fluorine-containing elastomer A4 was 0.0 mass%.

### [Example 7]

### <First Polymerization Step>

Ultrapure water (1196 g), PMVE (93 g), TFE (15 g), 8CNVE (3.4 g), and a 0.25 mass% aqueous NaVSA solution (20 g, NaVSA 50 mg) were charged into a 2.2 L stainless steel pressure-resistant reactor, and the temperature was raised to 90°C while stirring. From the time point when the pressure reached 1.4 MPaG, an ammonium persulfate aqueous solution (15 mass%, total amount 20 g) was added 8 times every 5 minutes to proceed the polymerization. Since the pressure in the reactor decreased with the start of polymerization, TFE was added and the pressure was kept constant. This was repeated, and when an amount of TFE added after the start of polymerization reached 40 g, addition of TFE to be fed under pressure after the start of polymerization was stopped, an internal temperature of the reactor was cooled to 10°C to stop the polymerization reaction, gas remaining in the reactor was recovered, and then a liquid was withdrawn to obtain a raw material solution B5.

The average particle diameter of the particles of the first fluorine-containing polymer B3-1 in the raw material solution B5 was 70 nm.

The solid content concentration of the raw material solution B5 was 3.3 mass%.

The raw material solution B5 was subjected to freeze coagulation and then filtered off, and the obtained first fluorine-containing polymer B3-1 was washed with ultrapure water. Thereafter, vacuum drying was performed at 100°C.

The obtained first fluorine-containing polymer B3-1 was analyzed by NMR, and the result showed that PMVE/TFE/8CNVE = 29.1/69.9/1.0 (molar ratio). The first fluorine-containing polymer B3-1 did not have a melting point.

### <Purification Step>

A purification step was performed in the same manner as in Example 4 to obtain a raw material solution B6.

### <Second Polymerization Step>

A second polymerization step was performed in the same manner as in Example 4 to obtain a second aqueous dispersion B3-2.

The second aqueous dispersion B3-2 was a dispersion in which particles containing the first fluorine-containing polymer B3-1 and the second fluorine-containing polymer B3-2 were dispersed in an aqueous medium. The average particle size of the particles in the aqueous dispersion B3-2 was 120 nm.

The second aqueous dispersion B3-2 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer B3 containing the first fluorine-containing polymer B3-1 and the second fluorine-containing polymer B3-2.

The obtained fluorine-containing elastomer B3 was analyzed by NMR, and the result showed that the composition was PMVE/PMAE/TFE/8CNVE = 30.6/0.1/68.6/0.7 (molar ratio). In addition, the fluorine-containing elastomer B3 did not have a melting point. The water content of the fluorine-containing elastomer B3 was 0.2 mass%.

### [Example 8]

### <First Polymerization Step>

A raw material solution B7 was obtained in the same manner as in Example 4 except that 8CNVE was not added.

The average particle diameter of the particles of the first fluorine-containing polymer B4-1 in the raw material solution B7 was 43.5 nm.

The solid content concentration of the raw material solution B7 was 2.3 mass%.

The raw material solution B7 was subjected to freeze coagulation and then filtered off, and the obtained first fluorine-containing polymer B4-1 was washed with ultrapure water. Thereafter, vacuum drying was performed at 100°C.

The obtained first fluorine-containing polymer B4-1 was analyzed by NMR, and the result showed that PMVE/TFE = 33/67 (molar ratio). The first fluorine-containing polymer B4-1 did not have a melting point.

### <Purification Step>

A purification step was performed in the same manner as in Example 4 to obtain a raw material solution B8.

### <Second Polymerization Step>

A second polymerization step was performed in the same manner as in Example 4 to obtain a second aqueous dispersion B4-2.

The second aqueous dispersion B4-2 was a dispersion in which particles containing the first fluorine-containing polymer B4-1 and the second fluorine-containing polymer 4-2 were dispersed in an aqueous medium. The average particle size of the particles in the aqueous dispersion B4-2 was 140 nm.

The second aqueous dispersion B4-2 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer B4 containing the first fluorine-containing polymer B4-1 and the second fluorine-containing polymer B4-2.

The obtained fluorine-containing elastomer B4 was analyzed by NMR, and the result showed that the composition was PMVE/PMAE/TFE/8CNVE = 30.4/68.1/0.5 (molar ratio). In addition, the fluorine-containing elastomer B4 did not have a melting point. The water content of the fluorine-containing elastomer B4 was 0.2 mass%.

### [Example 9]

Ultrapure water (1004 g), a 30 mass% aqueous solution of C₂F₅OCF₂CF₂OCF₂COONH₄ (80.1 g) as a water-soluble emulsifier having a fluorine atom, a 5 mass% aqueous solution of disodium hydrogen phosphate dodecahydrate (10.49 g), PMVE (55 g), and TFE (11 g) were added to a 2.1 L stainless pressure-resistant reactor, and the temperature was raised to 80°C while stirring. The internal pressure of the reactor at 0°C was 0.974 MPaG.

Next, an aqueous ammonium persulfate solution (3.0 mass%, 18 g) was added to initiate polymerization. When the internal pressure of the reactor decreased to 0.89 MPaG, TFE and PMVE were fed under pressure to increase the internal pressure of the reactor to 0.90 MPaG. After adding 16 g of TFE and 12 g of PMVE, 1.26 g of 8CNVE was added. This was repeated each time the internal pressure of the reactor decreased to 0.89 MPaG. When the polymerization rate decreased, a 3 mass% aqueous solution of APS was appropriately added. When an amount of TFE added after the start of polymerization reached 408 g, addition of TFE and PMVE to be fed under pressure after the start of polymerization was stopped, an internal temperature of the reactor was cooled to 10°C to stop the polymerization reaction, gas remaining in the reactor was recovered, and then a liquid was withdrawn to obtain an aqueous dispersion C1.

The total amount of added 8CNVE was 16.0 g.

The total amount of TFE added before the start of polymerization was 17 g, and the total amount of PMVE was 81 g.

The total amount of TFE added after the start of polymerization was 408 g, and the total amount of PMVE was 294 g.

The total amount of TFE added was 425 g, the total amount of PMVE added was 375 g, and the total amount of 8CNVE added was 16.0 g. The average particle size of the polymer particles in the aqueous dispersion C1 was 20.9 nm.

The aqueous dispersion C1 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer C1.

The obtained fluorine-containing elastomer C1 was analyzed by NMR, and the result showed that the composition was PMVE/TFE/8CNVE = 30.1/69.5/0.4 (molar ratio). In addition, the fluorine-containing elastomer C1 did not have a melting point. The water content of the fluorine-containing elastomer C1 was 0.0 mass%.

### [Example 10]

An aqueous dispersion C2 was obtained in the same manner as in Example 1 except that 8CNVE (3.4 g) was added to the reactor before an aqueous ammonium persulfate solution was added to initiate polymerization.

The aqueous dispersion C2 was aggregated with a 20 mass% aqueous potassium aluminum sulfate solution, and then separated by filtration, and the obtained solid was washed with ultrapure water. Thereafter, vacuum drying was performed at 100°C for 12 hours to obtain a fluorine-containing elastomer C2.

The obtained fluorine-containing elastomer C2 was analyzed by NMR, and the result showed that the composition was PMVE/TFE/8CNVE = 31.4/68.0/0.6 (molar ratio). In addition, the fluorine-containing elastomer C2 did not have a melting point. The water content of the fluorine-containing elastomer C2 was 0.0 mass%.

### [Example 11]

An aqueous dispersion A5 was obtained in the same manner as in Example 1 except that 3.2 g of C3DVE was added before the polymerization was started.

The total amount of TFE added was 177 g, the total amount of PMVE added was 190 g, the total amount of 8CNVE added was 16.0 g, and the total amount of C3DVE added was 3.2 g. The average particle size of the polymer particles in the aqueous dispersion A5 was 80.0 nm.

The aqueous dispersion A5 was aggregated with a 5 mass% nitric acid aqueous solution, then filtered off, and the obtained solid was washed with ultrapure water. Thereafter, vacuum drying was performed at 100°C for 12 hours to obtain a fluorine-containing elastomer A5.

The obtained fluorine-containing elastomer A5 was analyzed by NMR, and the result showed that the composition was PMVE/TFE/8CNVE = 30.6/68.8/0.6 (molar ratio). In addition, the fluorine-containing elastomer A5 did not have a melting point. The water content of the fluorine-containing elastomer A2 was 0.0 mass%.

Next, the following components were mixed in the following content amounts.
Fluorine-containing elastomer: 100 parts by mass
MT-C: 5 parts by mass
BOAP: 0.8 parts by mass

Details of components other than the fluorine-containing elastomer are as follows.
MT-C: MT carbon N990, manufactured by Vanderbilt Chemicals, LLC, carbon black
BOAP: 2,2-bis(3-amino-4-hydroxyphenyl)hexafluoropropane, crosslinking agent

The mixture was obtained by kneading for 10 minutes at room temperature (25°C) using a two-roll mill. A gap between two rolls was adjusted, and using the obtained mixture, a fluorine-containing elastomer composition of Example 1 processed into a sheet shape having a thickness of 3 mm was obtained.

Next, using the fluorine-containing elastomer composition obtained in each Example, primary crosslinking was performed by heat-pressing at 180°C for 20 minutes using a hydraulic press machine (model: SA-301 50T type, manufactured by TESTER SANGYO CO., LTD., ram diameter: 180 mm) to obtain the O-ring 1 (P-26 (standard specified in JIS B2401:2012)).

The obtained O-ring 1 was subjected to secondary crosslinking by heating in an oven (DN411I, manufactured by Yamato Scientific Co., Ltd.) in a nitrogen atmosphere at 90°C for 2 hours, then increasing the temperature to 200°C over 2 hours and heating at 200°C for 4 hours, and further increasing the temperature to 305°C over 2 hours and heating at 305°C for 12 hours. Thereafter, the O-ring was cooled to 23°C to obtain an O-ring which is a crosslinked rubber article. All of crosslinked products contained in the crosslinked rubber article had a heterocyclic structure.

### <Weight Reduction Rate>

After the O-ring was immersed in 1, 1, 1,2,2,3,3,4,4,5,5,6,6-tridecafluorohexane for 12 hours, vacuum drying was performed at 100°C until drying was completed.

The mass was measured every 12 hours, and it was determined that the drying was completed when the change rate from the previous measurement value was 0.01 mass% or less. Specifically, when the following Formula (M) was satisfied, it was determined that the drying was completed. $\left\{X\left(n\right)-X\left(n-1\right)\right\} / X \left(n-1\right) \times 100 \leq 0.01$ (M)
X0: a mass of a crosslinked rubber article
X1: a mass of the crosslinked rubber article when it is determined that drying has been completed
X(n): a mass of the crosslinked rubber article after (12 × n) hours have elapsed from a start of drying (n is an integer of 1 or more)
X(n-1): a mass of the crosslinked rubber article after {12(n-1)} hours have elapsed from a start of drying (n is an integer of 1 or more)

The weight reduction rate was calculated using the following formula. $Weight reduction rate \left(%\right) = \left\{X1/X0\right\} \times 100$

### <Surface Roughness (Sa)>

The O-ring was cut along the thickness direction to have a length of 5 to 10 mm, and then further cut along the length direction (that is, a direction orthogonal to the thickness direction) to obtain a test piece (length: 5 to 10 mm, thickness: 1.0 to 3.5 mm).

The test piece was placed on a sample stage of a laser microscope equipped with a white-light interferometer described below, the surface of a portion other than the cut surface of the test piece was observed, and the field of view was autofocused at a magnification of 10 times (objective lens) to acquire image data of the entire observation range (1062 µm × 1416 µm).

The obtained image data were subjected to surface shape correction (waviness correction: correction strength 5) using an analysis tool attached to a laser microscope equipped with a white-light interferometer, and an arithmetic mean roughness Sa of an entire observation region was determined. The value thus obtained was taken as the arithmetic mean roughness Sa.

Laser microscope equipped with a white-light interferometer: controller model VK-X3000, measurement unit model VK-X3100, manufactured by Keyence Corporation.

### <Measurement of Compression Set>

The compression set was measured according to the method described in ASTM D395 or JIS K6262 (2013). The O-ring (original thickness (wire diameter) = 3.5 mm) prepared in each example was compressed to a compression ratio of 18% using a compression device.

Next, a compression device in which the compressed O-ring was fixed was allowed to stand in an electric furnace, left at 300°C for 70 hours, then the compression device was taken out from the electric furnace, the O-ring was immediately removed from the compression device, the removed O-ring was allowed to stand in a thermostatic chamber at 23°C for 30 minutes, and a thickness of the O-ring (a thickness after compression treatment) was measured. The test was performed using two O-rings, and a value obtained by arithmetically averaging the measurement values of the two O-rings was used. The compression set was calculated by the following calculation formula. It is to be noted that the closer the compression set is to 0%, the smaller the compression set is, which is preferable. 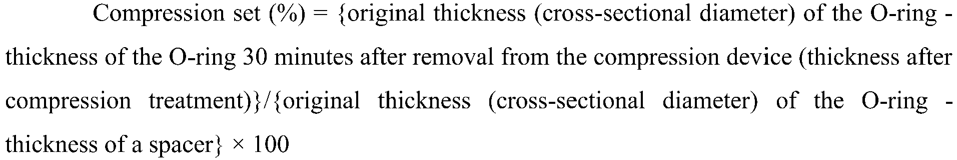 Compression set (%) = {original thickness (cross-sectional diameter) of the O-ring - thickness of the O-ring 30 minutes after removal from the compression device (thickness after compression treatment)}/{original thickness (cross-sectional diameter) of the O-ring - thickness of a spacer} × 100

Table 1 shows the evaluation results of the crosslinked rubber article.

In Table 1, in the types of production methods, the production method A means a production method in which polymerization is performed in one stage, and the production method B means a production method in which polymerization is performed in two stages.

"Fluorine-containing emulsifier amount" means a content amount of an emulsifier having a fluorine atom.

"TFE content amount" means a content amount of a structural unit based on TFE.

The "content amount of the CN monomer" means the content amount of the structural unit based on the cyano group-containing monomer.

**[Table 4]**

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Production method | Type | A | A | A | B | B | A | B | B | A | A | A |
| | Production method A (monomer A) | Compound (X)/8CNV E/TFE/PM VE | Compound (X)/8CNV E/TFE/PM VE | Compound (X)/8CNV E/TFE/PM VE | - | - | Compound (X)/8CNV E/TFE/PM VE/PMAE | - | - | 8CNVE/TF E/PMVE/P MAE | 8CNVE/TF E/PMVE/P MAE | Compound (X)/8CNV E/TFE/PM VE/C3DV E |
| | Production method B (first monomer) | - | - | - | Compound (X)/8CNV E/TFE/PM VE | Compound (X)/8CNV E/TFE/PM VE/PMAE | - | Compound (X)/8CNV E/TFE/PM VE | Compound (X)/TFE/P MVE | - | - | - |
| | Production method B (second monomer) | - | - | - | 8CNVE/TF E/PMVE | 8CNVE/TF E/PMVE | - | 8CNVE/TF E/PMVE | 8CNVE/TF E/PMVE | - | - | - |
| | Compound (X) | NaAAMPS | NaAAMPS | NaAAMPS | NaAAMPS | NaAAMPS | VSA | VSA | NaAAMPS | - | - | NaAAMPS |
| Fluorine-containing elastomer | Fluorine-containing emulsifier amount | < 250ppb | < 250ppb | < 250ppb | < 250ppb | < 250ppb | < 250ppb | < 250ppb | < 250ppb | > 1ppm | >1 ppm | < 250ppb |
| | Weight reduction rate (%) | 1.2 | 1.2 | 1.4 | 1.3 | 1.5 | 1.5 | 1.7 | 2.5 | 1.6 | 1.5 | 1.2 |
| | Metal content amount (ppm) | 1.2 | 0.8 | 2.0 | 1.6 | 0.7 | 1.3 | 0.6 | 0.7 | 1.2 | 120 | 2.0 |
| | TFE content amount (mol%) | 68.3 | 65.8 | 69.5 | 70.0 | 61.5 | 71.5 | 69.7 | 67.9 | 70.1 | 69.7 | 68.8 |
| | CN monomer content amount (mol%) | 0.6 | 0.7 | 0.4 | 0.5 | 0.5 | 0.7 | 1.0 | 0.6 | 0.4 | 0.7 | 0.6 |
| | Storage elastic modulus (kPa) | 405 | 350 | 378 | 450 | 325 | 446 | 480 | 389 | 400 | 328 | 394 |
| Crosslinked product | Fluorine-containing emulsifier amount | < 10ppm | < 10ppm | < 10ppm | < 10ppm | < 10ppm | < 10ppm | < 10ppm | < 10ppm | > 1ppm | > 1ppm | < 10ppm |
| | Weight reduction rate (%) | 0.14 | 0.12 | 0.05 | 0.28 | 0.26 | 0.15 | 0.27 | 0.53 | 0.55 | 0.17 | 0.05 |
| Evaluation | Surface roughness Sa (µm) | 1.4 | 1.2 | 1.5 | 1.6 | 1.4 | 1.8 | 1.7 | 2.5 | 2.3 | 1.4 | 1.6 |
| | Compression set (%) | 11.4 | 15.1 | 14.9 | 13.3 | 14.4 | 13.7 | 14.8 | 17.2 | 18 | 16 | 11 |

As shown in Table 3, in Example 1 to 7 and Example 11, crosslinked rubber articles having a smaller compression set and excellent surface smoothness were obtained as compared with Example 8 to 10.

The disclosures of Japanese Patent Application No. 2023-205993, filed on December 6, 2023, and Japanese Patent Application No. 2024-177486, filed on October 9, 2024, are incorporated herein by reference in their entirety. In addition, all documents, patent applications, and technical standards described in this specification are incorporated herein by reference to the same extent as if each document, patent application, and technical standard were specifically and individually described to be incorporated by reference.

## Claims

1. A method of producing a fluorine-containing elastomer, the method comprising a step of polymerizing a monomer containing a cyano group-containing monomer and at least one selected from the group consisting of tetrafluoroethylene, hexafluoropropylene, vinylidene fluoride, a fluorine-containing vinyl ether, and a fluorine-containing allyl ether in the presence of a compound represented by the following Formula (X) and an aqueous medium, and under a condition that an emulsifier having a fluorine atom is substantially absent:
CX¹X²=CX³-L-Z (X)
wherein, in the Formula (X),
each of X¹ and X² independently represents a hydrogen atom, a chlorine atom, or an alkyl group,
X³ represents a hydrogen atom or an alkyl group,
L represents a single bond or a divalent linking group, and
Z represents an anionic group or a salt of an anionic group.

2. The method of producing a fluorine-containing elastomer according to Claim 1, wherein the cyano group-containing monomer is represented by the following Formula (Y):
CR¹¹R¹²=CR¹³-R¹⁴-CN (Y)
wherein, in the Formula (Y), each of R¹¹, R¹², and R¹³ independently represents a hydrogen atom, a fluorine atom, or a methyl group, and R¹⁴ represents a divalent perfluorohydrocarbon group having from 1 to 10 carbon atoms, or a group having an ether oxygen atom at a terminal, or between carbon-carbon bonds, of a divalent perfluorohydrocarbon group having 1 to 10 carbon atoms.

3. The method of producing a fluorine-containing elastomer according to Claim 1, wherein a content amount of the cyano group-containing monomer is from 0.5 to 20 mol% relative to a total amount of the monomers used for the polymerizing of the fluorine-containing elastomer.

4. The method of producing a fluorine-containing elastomer according to Claim 1, wherein a content amount of the compound represented by the Formula (X) is from 0.1 to 5000 mass ppm relative to a total amount of the aqueous medium.

5. A method of producing a fluorine-containing elastomer, the method comprising:
a step of polymerizing a first monomer containing a cyano group-containing monomer and at least one selected from the group consisting of tetrafluoroethylene, hexafluoropropylene, vinylidene fluoride, a fluorine-containing vinyl ether, and a fluorine-containing allyl ether in a first aqueous medium under a condition that an emulsifier having a fluorine atom is substantially absent, to produce a first fluorine-containing polymer and to obtain an aqueous dispersion containing the first fluorine-containing polymer; and
a step of polymerizing a second monomer containing tetrafluoroethylene in the aqueous dispersion containing the first fluorine-containing polymer, to obtain a second fluorine-containing polymer, thereby obtaining a fluorine-containing elastomer containing the first fluorine-containing polymer and the second fluorine-containing polymer.

6. The method of producing a fluorine-containing elastomer according to Claim 5, wherein the cyano group-containing monomer is represented by the following Formula (Y):
CR¹¹R¹²=CR¹³-R¹⁴-CN (Y)
wherein, in the Formula (Y), each of R¹¹, R¹², and R¹³ independently represents a hydrogen atom, a fluorine atom, or a methyl group, and R¹⁴ represents a divalent perfluorohydrocarbon group having 1 to 10 carbon atoms, or a group having an ether oxygen atom at a terminal, or between carbon-carbon bonds, of a divalent perfluorohydrocarbon group having 1 to 10 carbon atoms.

7. The method of producing a fluorine-containing elastomer according to Claim 5, wherein the first aqueous medium further contains a compound represented by the following Formula (X):
CX¹X²=CX³-L-Z (X)
wherein, in the Formula (X),
each of X¹ and X² independently represents a hydrogen atom, a chlorine atom, or an alkyl group,
X³ represents a hydrogen atom or an alkyl group,
L represents a single bond or a divalent linking group, and
Z represents an anionic group or a salt of an anionic group.

8. The method of producing a fluorine-containing elastomer according to Claim 7, wherein a content amount of the compound represented by Formula (X) above is from 0.1 to 5000 mass ppm relative to a total amount of the first aqueous medium.

9. The method of producing a fluorine-containing elastomer according to Claim 5, wherein a content amount of the cyano group-containing monomer is from 0.5 to 20 mol% relative to a total amount of the first monomers.

10. A composition, comprising:
a compound represented by the following Formula (X);
a first fluorine-containing polymer containing a structural unit based on a cyano group-containing monomer and a structural unit based on at least one selected from the group consisting of tetrafluoroethylene, hexafluoropropylene, vinylidene fluoride, a fluorine-containing vinyl ether, and a fluorine-containing allyl ether; and
a second fluorine-containing polymer containing a structural unit based on tetrafluoroethylene,
wherein the composition substantially does not contain an emulsifier having a fluorine atom:
CX¹X²=CX³-L-Z (X)
wherein, in the Formula (X), each of X¹ and X² independently represents a hydrogen atom, a chlorine atom, or an alkyl group,
X³ represents a hydrogen atom or an alkyl group,
L represents a single bond or a divalent linking group, and
Z represents an anionic group or a salt of an anionic group.

11. The composition according to Claim 10, wherein a content amount of metal is 50 mass ppm or less relative to a total solid content amount of the composition.

12. The composition according to Claim 10 or 11, wherein a content amount of a structural unit based on the cyano group-containing monomer is from 0.1 to 10 mol% relative to a total amount of the first fluorine-containing polymer and the second fluorine-containing polymer.

13. A solid composition, containing a fluorine-containing elastomer containing a structural unit based on a cyano group-containing monomer, a structural unit based on tetrafluoroethylene, and a structural unit based on at least one selected from the group consisting of a fluorine-containing vinyl ether and a fluorine-containing allyl ether, wherein:
when heated in a nitrogen atmosphere under the following Condition 1, a weight reduction rate after a lapse of 1000 minutes from a start of temperature increase is 2.0% or less, and
the solid composition substantially does not contain an emulsifier having a fluorine atom:
(Condition 1)
the temperature is raised from 40°C to 90°C at a heating rate of 20°C/min, maintained at 90°C for 120 minutes, raised from 90°C to 200°C at a heating rate of 20°C/min, maintained at 200°C for 240 minutes, raised from 200°C to 305°C at a heating rate of 20°C/min, and maintained at 305°C for 720 minutes.

14. The solid composition according to Claim 13, wherein a content amount of metal is 50 mass ppm or less relative to a total amount of the solid composition.

15. The solid composition according to Claim 13 or 14, wherein a content amount of a structural unit based on the cyano group-containing monomer is from 0.1 mol% to 10 mol% relative to a total amount of the fluorine-containing elastomer.

16. The solid composition according to Claim 13 or 14, wherein a storage elastic modulus is 200 to 600 kPa.

17. A crosslinked rubber article, containing a crosslinked product obtained by crosslinking a fluorine-containing elastomer containing a structural unit based on a cyano group-containing monomer, a structural unit based on tetrafluoroethylene, and a structural unit based on at least one selected from the group consisting of a fluorine-containing vinyl ether and a fluorine-containing allyl ether, wherein:
a weight reduction rate after immersion in 1,1,1,2,2,3,3,4,4,5,5,6,6-tridecafluorohexane for 12 hours and drying is 0.5% or less, and
the crosslinked rubber article substantially does not contain an emulsifier having a fluorine atom.

18. The crosslinked rubber article according to Claim 17, wherein the crosslinked product has a heterocyclic structure.

19. The crosslinked rubber article according to Claim 17, wherein the crosslinked product has at least one structure selected from the group consisting of an oxazole structure and a triazine structure.
